# EUROPEAN PATENT APPLICATION

(11) **EP 4 796 291 A1**
(43) Date of publication of application: **26.08.2026**
(21) Application number: 25159417.2
(22) Date of filing: 21.02.2025
(51) Int. Cl.: B29C 64/124, B33Y 10/00, B33Y 70/10, B29C 64/241, B29C 64/277, B33Y 80/00, B33Y 40/20, A61C 5/77, A61C 8/00, A61C 13/00

(54) **A METHOD FOR VOLUMETRIC PRINTING A DENTAL COMPONENT BY PHOTOPOLYMERIZATION OF A PHOTOCURABLE RESIN**

(71) Applicant: xolo GmbH, 12489 Berlin (DE)
(72) Inventor: Radzinski, Dirk, 12489 Berlin (DE); König, Niklas, 12489 Berlin (DE); Anaby, Aviel, 12489 Berlin (DE); Reuter, Marcus, 12489 Berlin (DE); Garmshausen, Yves, 12489 Berlin (DE); Israel, Eric, 12489 Berlin (DE); Vasconcelos Lima, Luciola, 12489 Berlin (DE); Herder, Martin, 12489 Berlin (DE)
(74) Representative: Hafner & Kohl PartmbB

(57) **Abstract**

A method for volumetric printing a dental component by photopolymerization of a photocurable resin.

## Description

### Field of invention

The invention relates to a method for volumetric printing a dental component by photopolymerization of a photocurable resin.

### Background Art

Manufacturing techniques for manufacturing dental components, such as e.g. dental prosthesis, particularly dental implants, bridges, inlays, overlays, etc., have been generally known in the art. Such techniques also comprise the implementation of established additive manufacturing techniques for additively manufacturing dental components. In this context, particularly so-called powder-bed based additive manufacturing techniques, such as selective laser melting techniques or selective laser sintering techniques, have been implemented to manufacture dental components by selectively irradiating and consolidating layers of a powdered build material with one or more energy beams.

While known manufacturing techniques generally facilitate manufacturing dental components with good properties, there exists a need for further advanced manufacturing techniques for manufacturing dental components which provide advantages over existing manufacturing techniques. Particularly, there exists a need for further advanced manufacturing techniques for manufacturing dental components which allow for faster manufacturing, higher design complexity, and higher resolution of the manufactured dental components; the latter applies particularly, with respect to known powder-bed based additive manufacturing techniques.

It is therefore, the object of the invention to provide an improved manufacturing technique for manufacturing dental components.

### Summary of the invention

A first aspect of the invention relates to a method for volumetric printing a dental component by photopolymerization of a photocurable resin, which method comprises at least one irradiation process which comprises irradiating a photocurable resin with light of at least one wavelength to form, by photopolymerization, particularly by multi-color photopolymerization, more particularly by dual-color photopolymerization, at least one dental component. The method thus, enables implementing a volumetric printing process for manufacturing at least one dental component.

Particularly, the method can enables implementing a volumetric printing process which comprises at least one of: xolography (see e.g. WO 2020/245456 A1, the contents of which are incorporated herein by reference), computed axial lithography, CAL, which comprises simultaneously directing optical projections from optical subsystems at a plurality of angles through a volume of photocurable resin provided within a, particularly rotatable and/or transparent, container, the optical projections further being directed about a z-axis extending through the volume of photocurable resin; and providing each of the optical projections with a calculated three-dimensional intensity distribution acting over a fixed temporal exposure period, which is sufficient to at least one of cure or remove selected portions of the volume of photocurable resin, and leave other portions unmodified, to form a desired three-dimensional object, particularly while simultaneously rotating the container about the z-axis, e.g. as disclosed in documents WO 2018/208378 A2 and Kelly et al.: "Computed Axial Lithography (CAL): Toward Single Step 3D Printing of Arbitrary Geometries" which is available for download from the following URL: https://doi.org/10.48550/arXiv.1705.05893, for instance, or a volumetric 3d-printing process oftentimes denoted as volumetric additive manufacturing via tomographic back-projections or tomographic reconstruction, as disclosed in document Kelly et al. Science, 2019, 363, 1075-1079: "Volumetric additive manufacturing via tomographic reconstruction" which is available for download from the following URL: https://www.science.org/doi/10.1126/science.aau7114, for instance; or in document Loterie et al.: "Volumetric 3D printing of elastomers by tomographic back-projections" which is available for download from the following URL: http://dx.doi.Org/10.13140/RG.2.2.20027.46889, for instance; a volumetric printing process which comprises tomographic reproductions or tomographic back projections, particularly via projecting light images from multiple directions into a working volume; a volumetric printing process which comprises controlling a light source comprising a plurality of pixels to emit a plurality of beams toward an optical objective; diverging the plurality of beams, via the optical objective, as the plurality of beams exits the optical objective toward a volume of resin; translating, via one or more motors, the optical objective with respect to the volume of resin; by translating the optical objective relative to the volume of resin, applying the plurality of beams to a plurality of voxels inside the volume of resin; solidifying the plurality of voxels by the application of the plurality of beams to the plurality of voxels; applying the plurality of beams, via the optical objective, such that each of the plurality of voxels are exposed by at least two different beams among the plurality of beams; and exposing, via the at least two different beams, the each voxel at two different times such that the at least two different beams spatially overlap only in the each voxel, wherein a total exposure that solidifies the volume of resin in the each voxel equals to at least a sum of exposure of the at least two different beams at the each voxel (see e.g. WO2024163474A1, the contents of which are incorporated herein by reference); or a volumetric printing process, e.g. sometimes denoted as "cone beam lithography" or "parallax manufacturing" as suggested by Vitro3D Inc., in which an image is projected from a light source towards a substrate, wherein the image size increases with increasing distance between the substrate and the light source. More specifically, the light path can be in a cone shape or truncated cone shape or in a shape which resembles a pyramid or truncated pyramid with a quadratic or rectangular base. By moving the light source relative to the resin, each voxel of the resin can experience irradiation from different angles. By changing the image for each relative position of irradiation and resin, each voxel can absorb a specific light dose leading to solidification of the resin in the shape of the voxels which have absorbed a light dose above a threshold light dose. As such, the method of cone beam lithography or parallax manufacturing can be similar to the reverse process of cone beam reconstruction.

The volumetric printing process comprises at least one irradiation process which comprises irradiating a photocurable resin with light of at least one wavelength to form, by photopolymerization, particularly by multi-color photopolymerization, more particularly by dual-color photopolymerization, at least one dental component. The method can thus, comprise at least one irradiation process which comprises irradiating, typically on basis of a plurality of printing parameters, a photocurable resin with light of a first wavelength and light of a second wavelength, which is different from the first wavelength, to form, by multi-color photopolymerization, particularly by dual-color photopolymerization, a three-dimensional object in the shape of a dental component in at least one direction. Particularly, the method can thus, comprise a process of irradiating a photocurable resin with light of a first wavelength and light of a second wavelength, which is different from the first wavelength, to form, by multi-color photopolymerization, particularly by dual-color photopolymerization, at least one three-dimensional object in the shape of a dental component in at least one direction, wherein irradiating the photocurable resin with the light of the first wavelength and the second wavelength is typically based on one or more printing parameters. The at least one direction can be or comprise a formation direction of the respective dental component to be printed, i. e. the or a direction in which the respective dental component is printed. The method generally, enables volumetric printing of one or more dental components in the at least one (formation) direction.

Generally, the light used for irradiating the photocurable resin in the at least one irradiation process can have a wavelength ranging between 350 nm and 500 nm, particularly between 375 nm and 475 nm, more particularly between 375 nm and 455 nm, more particularly between 395 nm and 425 nm.

In exemplary embodiments in which the at least one irradiation process comprises irradiating the photocurable resin with light of a first wavelength and light of a second wavelength, which is different from the first wavelength, the following applies:
The light of the first wavelength can comprise a wavelength in the range of: 350 nm - 500 nm, particularly 375 nm - 450 nm, more particularly 385 nm - 440 nm, more particularly 395 nm - 420, more particularly 400 nm - 410 nm, for instance. The light of the first wavelength can comprise a spectrum of wavelengths, particularly at least partly covering the respective ranges. As a concrete example, the first wavelength can be ca. 375 nm. Typically, the first wavelength will be chosen at least under consideration of the photochemical properties, particularly the photochromic properties, of the photoinitiator molecules of at least one photoinitiator of the photocurable resin.

The light of the second wavelength can comprise a wavelength in the range of: 400 nm - 1000 nm, particularly 425 - 750 nm, more particularly 450 - 675 nm, more particularly 500 - 650 nm, for instance. The light of the second wavelength can comprise a spectrum of wavelengths, particularly at least partly covering the respective ranges. As an example, the second wavelength can be ca. 475 nm. Preferably, the light of the second wavelength can comprise a wavelength in a range which does not include the first wavelength. Typically, the second wavelength will be chosen at least under consideration of the photochemical properties, particularly the photochromic properties, of the photoinitiator molecules of at least one photoinitiator of the photocurable resin.

Typically, the photocurable resin is irradiated with the light of the first wavelength and the light of the second wavelength such that the light of the first wavelength and the light of the second wavelength intersect in the or a formation zone. The formation zone can generally be deemed the zone in which the photopolymerization of the photocurable resin takes place which results in photocuring and/or solidification, respectively of the photocurable resin and forming at least a cross-section of the dental component to be printed. As such, the light of the first wavelength can be irradiated into the photocurable resin at a different angle and/or in a different direction relative to the light of the second wavelength. As an example, the light of the first wavelength can be irradiated into the photocurable resin at an angle of ca. 90° relative to the light of the second wavelength.

The light of the first wavelength can comprise a light sheet which can comprise a plurality of light beams extending through the photocurable resin. Respective light beams can comprise two or more (substantially) parallel light beams. Respective light beams can intersect in one or more intersection points; respective intersection points can be (substantially) arranged in a common plane which can define a light plane. Additionally or alternatively, respective light beams can comprise a light plane, for instance. A light plane can be or comprise a light plane in which the or a plurality of light beams, such as e.g. (substantially) parallel light beams, extend adjacent such that there is no intermediate space between directly adjacent light beams. Notably, at least some of the directly adjacent light beams can also partially overlap. Alternatively, a light plane can be or comprise a light plane in which the or a plurality of light beams extend adjacent such that there is an intermediate space between directly adjacent light beams. Respective light beams can be generated by a directed light emission device, such as e.g. a laser device, which can form part of an irradiation device of a volumetric printing apparatus used for implementing the method, for instance.

A respective light sheet or light beam, respectively can comprise a main extension which can be generally understood as the extension direction of the respective individual light sheet or light beam between opposing walls or wall portions of a container delimiting a working volume. Particularly, the main extension direction of each respective light sheet or light beam can be understood as the main propagation direction of the light of the light sheet or light beam between opposing walls or wall portions of a container delimiting the working volume. Hence, the main extension direction of a respective light sheet or light beam can correspond to a direction along a line which halves the divergence or divergence angle, respectively of the light sheet or light beam within the working volume.

The height direction or height extension of a respective light sheet or light beam can be generally understood as the direction with maximum spatial extension which extends orthogonal to the main extension direction. Particularly, the height direction or height extension can be a direction or extension parallel to a wall or wall portion of a container delimiting the working volume through which wall or wall portion, respectively the light sheet or light beam enters the working volume.

The light of the second wavelength can comprise a projection of images corresponding to a cross-sectional geometry of a dental component to be printed or a plurality of points or lines corresponding to a cross-sectional geometry of the dental component to be printed. Respective points or lines can form a pattern, such as e.g. a hatch pattern. A respective projection can be generated by a light projection device, such as e.g. a digital light projection device, which can form part of an irradiation device of a volumetric printing apparatus used for implementing the method. As an example, the light projection device can be or comprise a digital micromirror device (DMD) or a liquid-crystal display (LCD) configured to generate the different images corresponding to a cross-sectional geometry of a dental component, which can form part of an irradiation device of a volumetric printing apparatus used for implementing the method. Additionally or alternatively, a respective point or line can be generated by a directed light emission device, such as e.g. a laser device, which can form part of an irradiation device of a volumetric printing apparatus used for implementing the method, for instance.

Respective printing parameters used for implementing the at least one irradiation process can generally be or comprise parameters of the at least one irradiation process which influence the spatial and/or temporal irradiation of the photocurable resin with the light of the first and/or the second wavelength. Respective printing parameters can additionally or alternatively be or comprise the number of irradiation steps in which one or more volume elements, e.g. voxels, of the photocurable resin are irradiated with the light of the first wavelength and/or with the light of the second wavelength. As such, respective printing parameters can be or comprise control parameters of a volumetric printing apparatus for implementing the method which control parameters concern the spatial and/or temporal irradiation of the photocurable resin with the light of the first and the second wavelength to form, particularly by multi-color photopolymerization, more particularly by dual-color photopolymerization, a dental component in at least one direction. Particularly, respective printing parameters can be or comprise control parameters of an irradiation device of a respective volumetric printing apparatus which irradiation device is configured to irradiate a photocurable resin with light of a respective first and second wavelength to form, by multi-color photopolymerization, particularly by dual-color photopolymerization, a dental component in at least one direction. Respective printing parameters can also be or comprise control parameters of a drive device of a respective volumetric printing apparatus which drive device is configured to move the photocurable resin or a container containing the photocurable resin in the at least one direction, for instance.

The inventors surprisingly found that implementing a volumetric printing technique, which comprises at least one irradiation process of irradiating a photocurable resin with light of at least one wavelength, particularly with light of at least a respective first wavelength and light of a respective second wavelength, for forming, by photopolymerization, particularly by multi-color photopolymerization, more particularly by dual-color photopolymerization, a dental component has several advantages. Particularly, the inventors found that implementing a volumetric printing technique, which comprises at least one irradiation process of irradiating a photocurable resin with light of at least one wavelength, particularly with light of at least a respective first wavelength and a respective second wavelength, for forming, by photopolymerization, particularly by multi-color photopolymerization, more particularly by dual-color photopolymerization, a dental component, can be highly beneficial for manufacturing dental components. Specifically, the inventors surprisingly found that advantages over existing manufacturing techniques for manufacturing dental components, particularly over existing additive manufacturing techniques, could be observed, such as e.g. faster manufacturing, higher design complexity, and higher resolution of the printed components, when implementing a respective volumetric printing process which has been generally known for producing three-dimensional objects, such as e.g. optical elements, other than medical components, particularly dental components. Importantly, the inventors surprisingly found that dental components manufactured by a volumetric printing technique, particularly a volumetric printing technique comprising a dual-color photopolymerization, benefit from improved surface properties, particularly smooth surfaces, which leads to improved comfort, when wearing the dental component.

As such, the method specified herein enables an improved principle for manufacturing dental components which is based on the implementation of a volumetric printing technique.

Exemplary and thus, non-limiting embodiments of dental components which can be manufactured in accordance with the method are a dental prosthesis, particularly a dental implant, a bridge, or an inlay, overlay, etc. As such, a dental component which can be manufactured in accordance with the method can be or comprise at least one of: a dental prosthesis, particularly a dental implant; a bridge; an inlay; an overlay; a veneer; an occlusal appliance, such as e.g. a bite splint, a retainer, a mouthguard, a migraine prevention device, etc.; a mandibular advancement device, such as one useable as a dental sleep medicine; a removable, such as e.g. a denture, a partial, a combination of a crown and a partial, a flipper, etc.; etc. The term "dental implant" can refer to an implant assembly which comprises a root and a crown which are connected with each other via at least one abutment element, possibly via at least one connection element, such as e.g. a screw assigned to the at least one abutment element. Each element of a respective implant assembly can be deemed a dental component.

Further exemplary and thus, non-limiting embodiments of dental components which can be manufactured in accordance with the method are an orthodontic device for positioning and/or orienting one or more teeth, such as e.g. an aligner or a dental brace respectively, which is used to adjust the position and/or orientation of one or more teeth. As such, a dental component which can be manufactured in accordance with the method can be or comprise an orthodontic device for positioning and/or orienting one or more teeth, such as e.g. an aligner or a dental brace respectively, which is used to adjust the position and/or orientation of one or more teeth.

Exemplary embodiments of the method and related examples will be specified in the following. Notably, one, more or all of the exemplary embodiments and examples can be arbitrarily combined.

According to an exemplary embodiment, the photocurable resin can be provided in a container delimiting a container volume. The container volume can comprise the or a working volume which includes the photocurable resin and in which the at least one dental component can be printed in accordance with the method. One or more walls of the container can be made of a material which enables irradiating the photocurable resin inside the container with the light of the at least one wavelength. A respective material can be, at least with respect to the light of the at least one wavelength, a transparent material, for instance. A respective transparent material can be or comprise glass or a polymer, such as e.g. polycarbonate, polymethylmethacrylate, or cyclic olefin copolymer, for instance.

According to another exemplary embodiment, the at least one irradiation process can comprise irradiating a photocurable resin with light of at least a first wavelength and a second wavelength, different from the first wavelength, to form, by multi-color photopolymerization, particularly by dual-color photopolymerization, the dental component (as indicated above). Concrete examples of respective first and second wavelengths are provided further above. The at least one irradiation process can thus, comprise multi-color photopolymerization, particularly dual-color photopolymerization, of a photocurable resin which provides several benefits for manufacturing dental components, such as e.g. faster manufacturing, higher design complexity, and higher resolution.

In such exemplary embodiments, irradiating the photocurable resin with the light of the first wavelength can cause one or more photoinitiator molecules of the photocurable resin to transfer from an initial state into an intermediate state with changed optical properties compared to the initial state, such that the photoinitiator molecules of the one or more photoinitiators in the intermediate state can absorb the light of the second wavelength which results in that the photoinitiator molecules of the one or more photoinitiators are transferred from the intermediate state to a reactive state by absorption of light of the second wavelength which locally triggers the polymerization of the photocurable resin to form the at least one dental component.

As an example, the photocurable resin can be a photocurable monomer resin or a photocurable oligomer resin, which may e.g. include acrylates, methacrylates, thiol + ene, epoxides, oxiranes, oxetanes, or vinylethers, for instance. Multi-color photopolymerization can comprise multi-photon photopolymerization, particularly dual-photon photopolymerization, of the photocurable resin. Photopolymerization of the photocurable resin is typically effected by irradiating the photocurable resin with the light of the first wavelength and, particularly simultaneously, the light of the second wavelength, which is different from the first wavelength, which results in that photoinitiator molecules of the one or more photoinitiators of the photocurable resin are converted, e.g., due to the absorption of the light of the first wavelength, from an initial state in which the molecules of the one or more photoinitiators (substantially) do not absorb the light of the second wavelength, into an intermediate state with changed optical properties compared to the initial state, such that the photoinitiator molecules of the one or more photoinitiators in the intermediate state absorb the light of the second wavelength which results in that the molecules of the one or more photoinitiators are transferred from the intermediate state to a reactive state which locally triggers the polymerization of the photocurable resin to form at least one dental component.

A back reaction of the photoinitiator molecules of the one or more photoinitiators from the intermediate state into the initial state can be thermally induced, for instance. Hence, the intermediate state may return thermally at the printing temperature of the photocurable resin to the initial state. Preferably, the intermediate state may return thermally at the respective printing temperature to the initial state in a reaction or reaction sequence with one or more rate constants with the highest rate constant higher than k=0.01 s⁻¹. Especially preferably, at least one rate constant for the thermal back reaction is higher than 0.02 s⁻¹, more preferably higher than 0.05 s⁻¹, even more preferably higher than 0.1 s⁻¹, still more preferably higher than 1.0 s⁻¹, most preferably higher than 5.0 s⁻¹. Hence, the rate constant may be in the range of 0.05 s⁻¹ and 1.0 s⁻¹, or any other range which may be formed from the values above. A high rate constant may result in an improved resolution of the printed dental component.

Alternatively, the intermediate state may substantially not return thermally at the respective printing temperature of the photocurable resin to the initial state. Preferably, the intermediate state may return thermally at the printing temperature to the initial state in a reaction or reaction sequence with one or more rate constants with at least one rate constant lower than k=100 s⁻¹. Especially preferably, at least one rate constant for the thermal back reaction is lower than 1 s⁻¹, more preferably lower than 0.1 s⁻¹, even more preferably lower than 0.01 s⁻¹, still more preferably lower than 0.001 s⁻¹, most preferably lower than 0.0001 s⁻¹. Hence, the rate constant may be in the range of 0.1 s⁻¹ and 0.0001 s⁻¹, or any other range which may be formed from the values above.

Further alternatively, the intermediate state may substantially not return thermally at the printing temperature of the photocurable resin to the initial state. Preferably, the intermediate state may return thermally at the printing temperature to the initial state in a reaction or reaction sequence with one or more rate constants with the highest rate constant lower than k=100 s⁻¹. Especially preferably, the highest rate constant for the thermal back reaction is lower than 1 s⁻¹, more preferably lower than 0.1 s⁻¹, even more preferably lower than 0.01 s⁻¹, still more preferably lower than 0.001 s⁻¹, most preferably lower than 0.0001 s⁻¹. Hence, the rate constant may be in the range of 0.1 s⁻¹ and 0.0001 s⁻¹, or any other range which may be formed from the values above.

According to another exemplary embodiment, the photocurable resin can have non-Newtonian flow properties, i.e. shear-thinning flow properties and/or has a yield point that is greater than the static shear stress caused by the three-dimensional object. The yield point of the photocurable resin can be determined, for example, by rotational rheometry (e.g. via a plate-plate rheometer) under quasi-static load via a 'creep test' or by running a slow shear stress ramp.

A corresponding yield point of the photocurable resin, which is greater than the static shear load from the object, is typically greater than or equal to 0.1 Pa, in particular 0.2 Pa, in particular 0.3 Pa, in particular 0.4 Pa, in particular 0.5 Pa, in particular 0.6 Pa, in particular 0.75 Pa, in particular 1 Pa. A corresponding yield point of the photocurable resin can therefore in particular be at least 0.1 Pa per cm³ of the working volume. For a working volume of 1 cm³, the yield point of the photocurable resin can be at least 0.1 Pa. For a working volume of 2 cm³, the yield point of the photocurable resin can be at least 0.2 Pa.

The static shear stress caused by the three-dimensional object depends in particular on the geometry and size of the three-dimensional object and can be less or greater than 0.5 Pa, depending on the geometry and size of the three-dimensional object. In order to realize corresponding rheological properties of the monomer mixture or the oligomer mixture, generally of the photocurable resin, it may be expedient to allow the monomer mixture or the oligomer mixture, generally the photocurable resin, to rest before optical processing, i.e. before printing. The photocurable resin can thus, in particular after being filled into a container defining the working volume, be left to rest for a certain time, in particular at least one hour, in particular at least six hours, in particular at least twelve hours.

A respective yield point of photocurable resin can be set by admixing oligomers and polymers with non-Newtonian flow properties and/or by admixing additives (rheological modifiers), for instance. Experiments have shown that the use of a photocurable resin having respective non-Newtonian flow properties can be beneficial for the volumetric printing process and can result in improved properties of dental components printed with the volumetric printing process. Particularly, the use of a photocurable resin having a respective non-Newtonian rheological behavior can facilitate manufacturing a three-dimensional object which remains (substantially) fixed in position within the working volume during formation which typically, improves the result of the volumetric printing process.

Exemplary suitable photocurable resins and exemplary suitable photoinitiators of a respective photocurable resin are e.g. known from US5230986A, WO2020245456A1, WO2023034398A1, WO2023034404A1, WO2023034402A1, WO2023220461A1, WO2023220463A1, the contents of which are incorporated herein by reference.

According to another exemplary embodiment, the at least one irradiation process can comprise irradiating the photocurable resin with light from at least two different (spatial) directions, particularly such that one or more volume elements of the photocurable resin are irradiated with light from at least two different angles. Hence, the at least one irradiation process can comprise that the photocurable resin is irradiated from a first direction and at least one second direction, which is different from the first direction. The first direction can be or comprise a direction transverse to a formation direction of the or a dental component to be printed and the second direction can be a direction parallel to the formation direction of the or a dental component to be printed. As such, a respective first direction can be related with a respective first angle and a respective second direction can be related with a respective second angle which can be 90° relative to the first angle, for instance. In either case, the light from a respective first direction can intersect with the light of a respective second direction in the or a formation zone. As mentioned above, the formation zone is typically the zone in which the photopolymerization of the photocurable resin takes place which results in photocuring and/or solidification, respectively of the photocurable resin and forming at least a cross-section of the at least one dental component to be printed.

According to another exemplary embodiment, at least one of: the photocurable resin, an irradiation device emitting the light of the at least one wavelength, and a formation zone within the photocurable resin, which is irradiated with the light of the at least one wavelength during the at least one irradiation process, is moved during the at least one irradiation process. A respective motion of at least one of: the photocurable resin, the irradiation device emitting the light of the at least one wavelength, or the formation zone within the photocurable resin, which is irradiated with the light of the at least one wavelength, can enable a highly efficient printing process and high printing speeds, respectively. As such, the method can particularly, comprise that the or a formation zone can be moved along at least one direction, particularly relative to a respective container (as indicated above) comprising the photocurable resin. The at least one direction can comprise the or a formation direction of the dental component to be printed. Motion of the at least one formation zone can e.g. be relative to at least one functional component of a volumetric printing apparatus used for implementing the method, for instance. A respective functional component of a respective volumetric printing apparatus can be a respective container or an irradiation device, for instance. As such, during the at least one irradiation process, the at least one formation zone can be actively moved, e.g. due to a coupling with a drive device, such as e.g. a motor, along the at least one direction, particularly the formation direction, e.g. at a nominal motion rate, through at least one part of the container volume, while the container is stationary. Alternatively, during the at least one irradiation process, the container can be actively moved, e.g. due to a coupling with a drive device, such as e.g. a motor, along the at least one direction, particularly the formation direction, while the at least one formation zone is stationary. Further alternatively, both the at least one formation zone and the container can be actively moved, e.g. due to a coupling with a drive device, such as e.g. a motor, wherein the at least one formation zone and the container can be moved in the same direction or in opposite directions. Also, the nominal motion rate and/or motion direction at which the at least one formation zone and/or the container is moved along the at least one direction, particularly relative to the container, can be varied. Additionally or alternatively, the or a second irradiation apparatus of a dual-color irradiation device can be actively moved along the at least one direction, particularly the formation direction, while at least one of the container or the at least one formation zone is actively moved or not actively moved. Actively moving the or a second irradiation apparatus of a dual-color irradiation device can be a means to implement a focus correction of the light of the second wavelength, for instance. As such, also embodiments are contemplated in which each of the or a second irradiation apparatus of a dual-color irradiation device, the at least one formation zone and the container are actively moved before, during or after the at least one irradiation process. Respective active motions can be controlled by the or a controller of an apparatus used for implementing the method, for instance.

According to another exemplary embodiment, the method can comprise at least one post-processing process, which is typically performed after completion of the at least one irradiation process. In the at least one post-processing process, the at least one dental component resulting from the at least one irradiation process undergoes at least one measure to change at least one property, particularly at least one of the following properties: the structural properties, particularly the mechanical properties, the optical properties, the thermal properties, the electrical properties, etc. Notably, a dental component which directly results from the at least one irradiation process can be a green component (or green body), i.e. an intermediate component which does not exhibit all desired properties of the respective dental component which are required for its intended use. As an example, a respective intermediate component can show lower mechanical properties, such as e.g. lower hardness, lower stiffness, etc., of a respective dental component which are required for its intended use. As such, the at least one post processing process can comprise that the as printed dental component (green component) is turned into a brown part. A respective post-processing process can thus, comprise at least one measure which enables post-curing of the as printed dental component (green component), particularly to transfer it into at least a brown component. A respective measure can comprise at least one of the following: subjecting the as printed dental component to elevated temperatures, e.g. by placing it in a heating device, such as e.g. an oven in which it undergoes post-curing; subjecting the as printed dental component to radiation exposure, e.g. by placing it in a radiation device in which it is irradiated with radiation to undergo post-curing; subjecting the as printed dental component to a chemically reactive atmosphere, e.g. by placing it in a chemical reactor in which it can react with a reaction agent to undergo post-curing, etc.

According to another exemplary embodiment, the photocurable resin can comprise at least one inorganic additive. The at least one inorganic additive serves for adjusting the properties of the at least one dental component, particularly with respect to a desired or intended use of the at least one dental component. Non-limiting examples of respective inorganic additives are provided in the following:
As an example, a respective inorganic additive can be or comprise a bone material, a bone replacement material, a bone composite material or a bone replacement composite material. As such, the dental component can be provided with, due to the presence of at least one respective inorganic additive, properties similar to a tooth (which can also depend on other factors such as e.g. the amount of the inorganic additive provided with the photocurable resin). Each of a bone material, a bone replacement material, a bone composite material, and a bone replacement composite material can comprise components of bone mineral such as e.g. calcium compounds, particularly calcium phosphate compounds (apatite), carbonate compounds, phosphate compounds, etc. Generally, the expression bone material or bone composite material can be or comprise natural bone material or synthetic bone materials.

As another example, the photocurable resin can comprise at least one inorganic additive selected from a metal, particularly a biocompatible metal, or a metal alloy, particularly a biocompatible metal alloy. As such, the dental component can be provided with, due to the presence of at least one respective inorganic additive, properties similar to a tooth (which can also depend on various factors such as e.g. the amount of the inorganic additive provided with the photocurable resin). Exemplary metals or metal alloys, can comprise precious metals, such as e.g. gold, silver, copper, etc.; cobalt-chrome alloys; iron-based-alloys, such as e.g. steel, etc.; titanium or titanium alloys, etc.

As another example, the photocurable resin can comprise at least one inorganic additive selected from a ceramic, particularly a biocompatible ceramic, or a ceramic composition, particularly a biocompatible ceramic composition. As such, the dental component can be provided with, due to the presence of at least one respective inorganic additive, properties similar to a tooth (which can also depend on various factors such as e.g. the amount of the inorganic additive provided with the photocurable resin). Exemplary ceramics or ceramic compositions can comprise zirconia (zirconium dioxide), for instance.

Generally, the at least one inorganic additive can be present within the photocurable resin in an amount ranging between 0,1 and 75 wt.-%, particularly in an amount ranging between 0,1 and 50 wt.-%, particularly in an amount ranging between 0,1 and 25 wt.-%. As indicated above, the amount of the inorganic additive can be (in addition to other parameters such as e.g. its type, chemistry, shape, size, etc.) a parameter for influencing and customizing, respective, the properties of the dental component to be printed and will thus, be typically selected with respect to a concrete intended use of the dental component to be printed.

Generally, the at least one inorganic additive can be or comprise a solid. Particularly, the at least one inorganic additive can comprise particles. As such, the at least one inorganic additive can be or comprise a particulate material which can e.g. ease preparing, e.g. by stirring, a mixture - a respective mixture can be a colloid or a dispersion, for instance - of the photocurable resin and the at least one inorganic additive with a desired distribution of the inorganic additive particles within the photocurable resin. A desired distribution is typically a homogenous distribution of the inorganic additive particles within the photocurable resin.

As an example, respective particles of the at least one inorganic additive can comprise at least one of the following shapes: a spherical shape or a non-spherical shape, particularly a plate-like shape or a longitudinal shape or an ellipsoid shape. Also the shape of the particles can be (in addition to other parameters such as e.g. its type, chemistry, size, etc.) a parameter for influencing and customizing, respectively, the properties of a dental component to be printed and will thus, be typically selected with respect to a concrete intended use of the dental component to be printed.

As an example, respective particles of the at least one inorganic additive can comprise a spatial extension of less than 10 µm, particularly less than 9 µm, more particularly less than 8 µm, more particularly less than 7 µm, more particularly less than 6 µm, more particularly less than 5 µm, more particularly less than 4 µm, more particularly less than 3 µm, more particularly less than 2 µm, more particularly less than 1 µm, more particularly less than 100 nm, more particularly less than 10 nm, more particularly less than 1 nm. The expression "spatial extension" can depend on the shape or base shape, respectively of the respective particles. For particles having a spherical shape or spherical base shape, respectively, the expression "spatial extension" can refer to a diameter, particularly a mean diameter, for particles having an ellipsoid shape or ellipsoid base shape, respectively, the expression "spatial extension" can refer to the long diameter or the short diameter, particularly the long diameter, of the particles. For particles having a plate-like shape or plate-like base shape, respectively, having a longitudinal axis, the expression "spatial extension" can refer to an extension along the longitudinal axis. For particles having a longitudinal shape or longitudinal base shape, respectively, the expression "spatial extension" can refer to an extension along the longitudinal axis of a respective particle or to the maximum distance between the edges of a respective particle.

Specifically, the particles of the at least one inorganic additive can also be or comprise nano-particles which can be of advantage for the at least one irradiation process as issues with undesired interactions of the light with the at least one inorganic additive can be avoided. As such, the size of the particles can be in the nanometer-range.

As another example, the at least one inorganic additive can comprise one or more fibers. Respective fibers can particularly, be beneficial for influencing the structural properties, e.g. the mechanical properties, of the dental component to be printed. Respective fibers can be fibers of organic materials and/or fibers of inorganic materials. Exemplary organic fibers can be or comprise carbon fibers or polymer fibers. Exemplary inorganic fibers can comprise ceramic fibers, metal fibers. The fibers can be regularly or irregularly distributed within the photocurable resin. A regular distribution of the fibers within the photocurable resin can be realized by a fiber network in which individual fibers are connected at specific connection points or node points, respectively.

Generally, the fibers can comprise a length ranging between 0,1 µm and 10 µm, particularly between 0,1 and 9 µm, more particularly between 0,1 and 8 µm, more particularly between 0,1 and 7 µm, more particularly between 0,1 and 6 µm, more particularly between 0,1 and 5 µm, more particularly between 0,1 and 4 µm, more particularly between 0,1 and 3 µm, more particularly between 0,1 and 2 µm, more particularly between 0,1 and 1 µm.

Specifically, the fibers can also be or comprise nano-fibers which can be of advantage for the at least one irradiation process as issues with undesired interactions of the light with the at least one inorganic additive can be avoided. As such, the length of the fibers can be in the nanometer-range.

According to another exemplary embodiment, the method can comprise spatially and/or temporally varying at least one printing parameter, particularly at least one printing parameter influencing the curing or the curing behavior of the photocurable resin, during the at least one irradiation process. The at least one irradiation process can thus, be concertedly and deliberately spatially and/or temporally controlled which can comprise a concertedly and deliberately controlled variation of at least one printing parameter, particularly of at least one printing parameter influencing the curing behavior of the photocurable resin, during the at least one irradiation process. A respective spatial and/or temporal variation of at least one printing parameter can also comprise a variation of the focus of the light of the first wavelength and/or a variation of the size of one or more images or one or more image elements, such as e.g. pixels, of the light of the second wavelength. A respective spatial and/or temporal variation of at least one printing parameter can also concern the number of irradiation steps in which one or more volume elements, e.g. voxels, of the photocurable resin are irradiated with the light of the or a respective first wavelength and/or light of the or a respective second wavelength. As such, a respective spatial and/or temporal variation of at least one printing parameter can also comprise a variation of the number of irradiation steps in which one or more volume elements, e.g. voxels, of the photocurable resin are irradiated. A respective spatial and/or temporal variation of at least one printing parameter can also concern the motion direction and/or motion rate of the photocurable resin, particularly relative to a light sheet formed of the light of the first wavelength. As such, a respective spatial and/or temporal variation of at least one printing parameter can also comprise a variation of the motion direction and/or motion rate of the photocurable resin, particularly relative to a light sheet formed of the light of the first wavelength.

Based on the spatial and/or temporal variation of at least one printing parameter, the at least one irradiation process can thus, comprise that at least one first portion of the dental component to be printed (first object portion) is printed with at least one different printing parameter relative to at least one further portion of the dental component to be printed (further object portion). A respective first object portion can comprise one or more first volume elements, e.g. voxels, of the photocurable resin which are located at one or more first positions within the photocurable resin. A respective further object portion can comprise one or more further volume elements, e.g. voxels, of the photocurable resin which are located at one or more further positions within the photocurable resin. Respective further volume elements can be volume elements which are located behind respective first volume elements in the formation direction.

The spatial and/or temporal variation of at least one printing parameter can enable that each volume element of the photocurable resin can be irradiated with individual printing parameters, particularly printing parameters which influence e.g. the amount of energy, energy density, energy intensity, etc. the respective volume element is exposed to during the at least one irradiation process.

The printing parameters for a respective volume element of the photocurable resin can be chosen under consideration of the position of the respective volume element within the photocurable resin and within the dental component to be printed, respectively. As an example, one or more volume elements of the photocurable resin which are located adjacent or in proximity to uncured or not to be cured photocurable resin can be irradiated with different printing parameters than one or more volume elements of the photocurable resin which are adjacent or in proximity to cured or to be cured photocurable resin. In such a manner, the spatial and/or temporal variation of at least one printing parameter can particularly be implemented to consider the so-called proximity-effect which causes that a volume element in proximity to another volume element which has already been cured exhibits a specific curing behavior, e.g. an easier or faster curing, which is different from the curing behavior of a volume element which is not in proximity to another volume element which has already been cured or photopolymerized, respectively. Notably, the proximity-effect oftentimes causes undesired structural anisotropy and related undesired lower shrinkage and deformation, respectively of three-dimensional objects in conventional volumetric printing methods.

As such, the method can, in accordance with respective embodiments, enable, based on the spatial and/or temporal variation of at least one printing parameter during the at least one irradiation process, printing dental components with higher structural isotropy and lower undesired shrinkage and deformation, respectively such that the resulting dental components show high(er) geometrical accuracy and structural fidelity, respectively.

According to another exemplary embodiment, spatially and/or temporally varying the at least one printing parameter, particularly a printing parameter influencing the curing (behavior) of the photocurable resin, can comprise that the photocurable resin is irradiated with the light of the or a first wavelength before it is irradiated with the light of the or a second wavelength. Hence, a variation of at least one printing parameter can comprise that the photocurable resin is spatially and/or temporally irradiated with the light of the or a first wavelength before it is irradiated with the light of the or a second wavelength. As such, one or more volume elements of the dental component to be printed can be irradiated with the light of the first wavelength before these volume elements are irradiated with the light of the second wavelength. Respective one or more volume elements of the photocurable resin can particularly, comprise the first volume elements of the dental component to be printed. In other words, the at least one irradiation process can comprise that one or more volume elements can be (only) irradiated with the light of the first wavelength spatially and/or temporally before subsequent volume elements are irradiated with the light of the first wavelength (and typically also with the light of the second wavelength). Irradiating volume elements of the photocurable resin with the light of the first wavelength only can result in a pre-activation of these volume elements which results in improved curing of these volume elements when they are subsequently irradiated with both the light of the first and the second wavelength and thus, result in improved structural properties of the respective dental component to be printed.

An example of irradiating the photocurable resin with the light of the first wavelength (spatially) before it is irradiated with the light of the second wavelength can comprise that irradiating the photocurable resin with the light of the first wavelength starts at a first position p1 and that irradiating the photocurable resin with the light of the second wavelength starts at a second position p2, wherein the second position p2 is located behind the first position p1 in the formation direction. The second position is typically a position within a volume of the photocurable resin which forms the respective dental component to be printed and thus, a position inside the respective dental component to be printed. Particularly, the second position can be a position within a volume of the photocurable resin which forms an outer boundary or edge of the respective dental component to be printed and thus, a position at a surface of the respective dental component to be printed. As such, the dental component to be printed can comprise portions which are located behind the second position with respect to the formation direction or the dental component is formed behind the second position with respect to the formation direction, respectively. Hence, the second position can comprise the first volume element, such as e.g. the first voxel, of the dental component to be printed with respect to the formation direction. The first position can also be a position within a volume of the photocurable resin which forms the respective dental component to be printed and thus, a position inside the respective dental component to be printed. Particularly, the first position is a position within a volume of the photocurable resin which does not form the respective dental component to be printed and thus, a position outside the respective dental component to be printed.

Another example of irradiating the photocurable resin with the light of the or a first wavelength (temporally) before it is irradiated with the light of the or a second wavelength can comprise that irradiating the photocurable resin with the light of the first wavelength starts at a first time t1 and that irradiating the photocurable resin with the light of the second wavelength starts at a second time t2, wherein t2 > t1. The second time typically corresponds to a time at which a volume of the photocurable resin which forms the respective dental component to be printed is irradiated. Particularly, the second time can correspond to a time at which a volume of the photocurable resin which forms an outer boundary or edge of the respective dental component to be printed and thus, a position at a surface of the respective dental component to be printed is irradiated. As such, the dental component to be printed can comprise portions which are to be printed after the second time or the printing of the dental component is completed after the second time, respectively. Hence, the second time can comprise a time at which the first volume element, such as e.g. the first voxel, of the dental component to be printed is printed with respect to the formation direction. The first time can also correspond to a time at which a volume of the photocurable resin which forms the respective dental component to be printed is irradiated. Yet, the first time can also correspond to a time at which a volume of the photocurable resin which does not form the respective dental component to be printed is irradiated.

According to another exemplary embodiment, spatially and/or temporally varying the at least one printing parameter, particularly a printing parameter influencing the curing (behavior) of the photocurable resin, can comprise that the photocurable resin is irradiated with the light of the first wavelength after it is irradiated with the light of the second wavelength. Hence, the variation of at least one printing parameter can comprise that the photocurable resin is spatially and/or temporally irradiated with the light of the first wavelength after it is irradiated with the light of the second wavelength. As such, one or more volume elements of the dental component to be printed can be irradiated with the light of the first wavelength after these volume elements have been irradiated with the light of the second wavelength. Respective one or more volume elements of the photocurable resin can particularly, comprise the last volume elements of the dental component to be printed. In other words, the at least one irradiation process can comprise that one or more volume elements can be (only) irradiated with the light of the first wavelength spatially and/or temporally after previous volume elements have been irradiated with the light of the second wavelength (and typically also the light of the first wavelength). Irradiating volume elements of the photocurable resin with the light of the first wavelength only can result in a post-activation of these volume elements which results in further curing of these volume elements after they have been irradiated with both the light of the first and the second wavelength and thus, result in improved structural properties of the respective dental component to be printed.

An example of irradiating the photocurable resin with the light of the or a first wavelength (spatially) after it is irradiated with the light of the or a second wavelength can comprise that irradiating the photocurable resin with the light of the second wavelength ends at a third position p3 and that irradiating the photocurable resin with the light of the first wavelength ends at a fourth position p4, wherein the fourth position p4 is behind the third position p3 in the formation direction. The third position is typically a position within a volume of the photocurable resin which forms the respective dental component to be printed and thus, a position inside the respective dental component to be printed. Particularly, the third position can be a position within a volume of the photocurable resin which forms an outer boundary or edge of the respective dental component to be printed and thus, a position at a surface of the respective dental component to be printed. As such, the dental component to be printed can comprise portions which are located in front of the third position with respect to the formation direction or the dental component is formed in front of the third position with respect to the formation direction, respectively. Hence, the third position can comprise the last volume element, such as e.g. the last voxel, of the dental component to be printed with respect to the formation direction. The fourth position can also be a position within a volume of the photocurable resin which forms the respective dental component to be printed and thus, a position inside the respective dental component to be printed. Particularly, the fourth position is a position within a volume of the photocurable resin which does not form the respective dental component to be printed and thus, a position outside the respective dental component to be printed.

Another example of irradiating the photocurable resin with the light of the or a first wavelength (temporally) after it is irradiated with the light of the or a second wavelength can comprise that irradiating the photocurable resin with the light of the second wavelength ends at a third time t3 and that irradiating the photocurable resin with the light of the first wavelength ends at a fourth time t4, wherein t4 > t3. The third time typically corresponds to a time at which a volume of the photocurable resin which forms the respective dental component to be printed is irradiated. Particularly, the third time can correspond to a time at which a volume of the photocurable resin which forms an outer boundary or edge of the respective dental component to be printed and thus, a position at a surface of the respective dental component to be printed is irradiated. As such, the dental component to be printed can comprise portions which are to be printed before the third time or the printing of the dental component is completed before the third time, respectively. Hence, the third time can comprise a time at which the last volume element, such as e.g. the last voxel, of the dental component to be printed is printed with respect to the formation direction. The fourth time can also correspond to a time at which a volume of the photocurable resin which forms the respective dental component to be printed is irradiated. Yet, the fourth time can also correspond to a time at which a volume of the photocurable resin which does not form the respective dental component to be printed is irradiated.

As such, spatially and/or temporally varying the at least one printing parameter, particularly a printing parameter influencing the curing behavior of the photocurable resin, can comprise that the photocurable resin is irradiated with the light of the first wavelength, particularly only with the light of the first wavelength, in a volume separate, particularly adjacent, more particularly directly adjacent, to the volume in which the dental component is to be printed, particularly wherein the volume is spatially and/or temporally before and/or behind the volume in which the dental component is to be printed with respect to the at least one formation direction of the dental component. In such a manner, pre- or post-activating the photocurable resin can be effected which can positively influence the structural properties of the dental component to be printed.

Thus, spatially and/or temporally irradiating the photocurable resin with the light of the or a first wavelength before or after it is irradiated with the light of the or a second wavelength can generally comprise that volume elements of the photocurable resin which volume elements do not form part of a dental component to be printed can be irradiated (only) with the light of the first wavelength. Such volume elements can be positioned, with respect to the formation direction of a dental component to be printed, before or in front of the volume elements which form part of the respective dental component to be printed, preferably before or in front of the first volume element of the dental component to be printed with respect to the formation direction, or after or behind the volume elements which form part of the respective dental component to be printed, preferably behind or after the last volume element of the dental component to be printed with respect to the formation direction.

It is also conceivable though that volume elements of the photocurable resin which do not form part of a dental component to be printed can be irradiated (only) with the light of the second wavelength such that the above remarks can also accordingly apply to the light of the second wavelength.

According to another exemplary embodiment, spatially and/or temporally varying the at least one printing parameter, particularly a printing parameter influencing the curing behavior of the photocurable resin, can comprise irradiating the photocurable resin with the light of the or a first wavelength and/or the or a second wavelength and spatially and/or temporally varying the energy, particularly the energy intensity, of the light of the first wavelength and/or the second wavelength, along the at least one direction. Spatially and/or temporally varying the energy, particularly the energy intensity, of the light of the first wavelength and/or the second wavelength, along the at least one direction can also positively influence the structural properties of the dental component to be printed, e.g. because it enables a control that each volume element of a dental component to be printed obtains a specific amount of energy which results in a desired curing of the respective volume element. As such, problems based on different degrees of curing of different volume elements of a dental component to be printed, which typically also lead to undesired structural anisotropy of the dental component, can be overcome or at least reduced. Likewise, the proximity-effect (as explained further above) can be overcome or at least reduced because one or more volume elements in proximity to other volume elements which have already been cured or photopolymerized, respectively can be irradiated with a different energy relative to one or more volume elements which are not in proximity to other volume elements which have already been cured or photopolymerized, respectively.

Particularly, spatially and/or temporally varying the energy or energy intensity, respectively can comprise that the energy level of the light of the or a first wavelength can be varied from a first energy level to at least a second energy level, the at least one second energy level being higher or lower than the first energy level. Hence, the energy or energy intensity, respectively of the light of the first wavelength can be dynamically or gradually spatially and/or temporally increased or decreased during the at least one irradiation process, particularly with respect to a nominal value which can be, but is not limited to, a minimum or maximum energy or energy intensity, respectively.

Additionally or alternatively, spatially and/or temporally varying the energy or energy intensity, respectively of the second wavelength can comprise that the energy level of the light of the or a second wavelength can be varied from a first energy level to at least a second energy level, the at least one second energy level being higher or lower than the first energy level. Hence, the energy or energy intensity, respectively of the light of the second wavelength can be dynamically or gradually spatially and/or temporally increased or decreased during the at least one irradiation process, particularly with respect to a nominal value which can be, but is not limited to, a minimum or maximum energy level or energy intensity level, respectively.

As an example, spatially and/or temporally varying the energy, particularly the energy intensity, of the light of the or a second wavelength along the at least one direction can comprise that one or more image elements, e.g. pixels, of respective images corresponding to a cross-sectional geometry of a dental component to be printed are spatially and/or temporally varied with respect to their energy or energy density, respectively. In other words, a respective projection of one or more images can comprise image elements of different energy or energy density, respectively. Varying the energy or energy density, respectively of respective image elements can comprise energy levels or energy density levels, respectively between minimum energy levels or minimum energy density levels, respectively and maximum energy levels or maximum energy density levels, respectively. Likewise, varying the energy or energy density, respectively of respective lines or points can comprise varying the energy levels or energy density levels, respectively between minimum energy levels or minimum energy density levels, respectively and maximum energy levels or maximum energy density levels, respectively. Varying the energy or energy density, respectively of respective image elements or points or lines, respectively can be effected by controlling a respective irradiation device used for generating respective projections of images or points or lines, respectively.

As another example, spatially and/or temporally varying the energy, particularly the energy intensity, of the light of the or a second wavelength along the at least one direction can comprise that one or more image elements, e.g. pixels, of respective images which correspond to a cross-sectional geometry of a dental component to be printed and/or one or more image elements, e.g. pixels, of respective images which do not correspond to a cross-sectional geometry of a dental component to be printed can be spatially and/or temporally varied such that the energy or energy intensity, respectively does not effect curing of the photocurable resin. Hence, spatially and/or temporally varying the energy, particularly the energy intensity, of the light of the second wavelength can comprise that the energy or energy intensity, respectively can be spatially and/or temporally set to a level which does not result in curing of the photocurable resin or to a level which results in undercuring of the photocurable resin. Yet, it is also conceivable that spatially and/or temporally varying the energy, particularly the energy intensity, of the light of the second wavelength can comprise that the energy or energy intensity, respectively can be spatially and/or temporally set to a level which results in overcuring of the photocurable resin. Particularly, spatially and/or temporally varying the energy, particularly the energy intensity, of the light of the second wavelength along the at least one direction can comprise that the first volume elements of the dental component to be printed with respect to the formation direction are irradiated with light of the second wavelength having a higher intensity than further volume elements of the dental component to be printed. In such a manner, a means for compensating the proximity-effect is given.

According to another exemplary embodiment, the photocurable resin can be irradiated with the light of the or a first wavelength at the first energy level, which can be a comparatively higher energy level compared to a nominal energy level or a second energy level, in an initial volume of the to be printed dental component which initial volume comprises at most 10%, particularly at most 9%, more particularly at most 8%, more particularly at most 7%, more particularly at most 6%, more particularly at most 5%, more particularly at most 4%, more particularly at most 3%, more particularly at most 2%, more particularly at most 1%, more particularly at most 0.9%, more particularly at most 0.8%, more particularly at most 0.7%, more particularly at most 0.6%, more particularly at most 0.5%, more particularly at most 0.4%, more particularly at most 0.3%, more particularly at most 0.2%, more particularly at most 0.1%, more particularly at most at most 0.09%, more particularly at most 0.08%, more particularly at most 0.07%, more particularly at most 0.06%, more particularly at most 0.05%, more particularly at most 0.04%, more particularly at most 0.03%, more particularly at most 0.02%, more particularly at most 0.01%, of the spatial extension of the dental component to be printed in the at least one direction. Irradiating the photocurable resin with the light of the first wavelength at a higher energy level in an initial volume of the to be printed dental component in the at least one direction can particularly, result in compensation or at least reduction of the proximity-effect, for instance and thus, lead to dental components with less structural anisotropy and improved structural properties.

Additionally or alternatively, the photocurable resin can be irradiated with the light of the or a first wavelength at the first energy level, which can be a comparatively higher energy level compared to a nominal energy level or a second energy level, for an initial time of at most 10 sec, particularly at most 9 sec, more particularly at most 8 sec, more particularly at most 7 sec, more particularly at most 6 sec, more particularly at most 5 sec, more particularly at most 4 sec, more particularly at most 3 sec, more particularly at most 2 sec, more particularly at most 1 sec, more particularly at most 0.9 sec, more particularly at most 0.8 sec, more particularly at most 0.7 sec, more particularly at most 0.6 sec, more particularly at most 0.5 sec, more particularly at most 0.4 sec, more particularly at most 0.3 sec, more particularly at most 0.2 sec, more particularly at most 0.1 sec, more particularly at most at most 0.09 sec, more particularly at most 0.08 sec, more particularly at most 0.07 sec, more particularly at most 0.06 sec, more particularly at most 0.05 sec, more particularly at most 0.04 sec, more particularly at most 0.03 sec, more particularly at most 0.02 sec, more particularly at most 0.01 sec, of the overall duration of the at least one irradiation process, particularly the overall duration of the period of the at least one irradiation process in which the photocurable resin is cured by multi-color photopolymerization to print a dental component. The respective times can correspond to periods of the at least one irradiation process in which at least the first frame, particularly at most the first 100 frames, more particularly at most the first 90 frames, more particularly at most the first 80 frames, more particularly at most the first 70 frames, more particularly at most the first 60 frames, more particularly at most the first 50 frames, more particularly at most the first 40 frames, more particularly at most the first 30 frames, more particularly at most the first 20 frames, more particularly at most the first 10 frames, of a projection of images of the light of the second wavelength is irradiated into the photocurable resin.

According to another exemplary embodiment, spatially and/or temporally varying the at least one printing parameter, particularly a printing parameter influencing the curing behavior of the photocurable resin, can comprise varying a focus parameter, such as e.g. the size and/or the position, of the or a focus of the light of the or a first wavelength and/or varying an image parameter, e.g. the size and/or the position, of an image or of at least one image element, e.g. a pixel, of an image projected with the light of the or a second wavelength. Hence, a focus parameter, such as e.g. the size and/or the position, focal length, depth of focus, depth of field, of the or a focus of the light of the first wavelength, which can comprise a plurality of light beams, particularly a plurality of (substantially) parallel light beams, extending through the photocurable resin, e.g. in the shape of a light sheet, can be a printing parameter which can be varied during the at least one irradiation process which enables e.g. spatially and/or temporally influencing the curing result in the formation zone and the resolution of features of the dental component to be printed, respectively. Varying one or more focus parameters of the light of the first wavelength can be implemented by one or more optical elements, such as e.g. (moveable) lenses, assigned to the irradiation device used for generating the light of the first wavelength and respective light beams extending through the photocurable resin, for instance. Respective optical elements can form part of a focus adjusting device of the irradiation device which can be configured for adjusting one or more focus parameters of the light of the first wavelength. Additionally or alternatively, an image parameter, such as e.g. the size and/or the position, of the or a projected image or at least one image element of the light of the second wavelength, which can comprise a projection of images corresponding to a cross-sectional geometry of a dental component to be printed, can be a printing parameter which can be varied during the at least one irradiation process which enables e.g. spatially and/or temporally influencing the curing result in the formation zone and the resolution of features of the dental component to be printed, respectively. Varying one or more image parameters of an image of the light of the second wavelength can be implemented with one or more optical elements, such as e.g. (moveable) lenses, pixel generators, etc., assigned to the irradiation device used for generating the light of the second wavelength and respective images corresponding to a cross-sectional geometry of a dental component to be printed, for instance. Respective optical elements can form part of an image adjusting device of the irradiation device which can be configured for adjusting one or more image parameters of the light of the second wavelength. A respective image adjusting device can be a hardware- and/or software-embodied component of a light projection device, such as e.g. a digital light projection device, for instance.

According to another exemplary embodiment, spatially and/or temporally varying the energy of the light of the or a second wavelength can comprise varying the energy or energy distribution of at least a part, e.g. a pixel, of at least one projected image corresponding to a cross-sectional geometry of a dental component to be printed or of at least one point or line of at least one light beam corresponding to a cross-sectional geometry of a dental component to be printed. Particularly, the energy of the light of the second wavelength can be varied along the at least one direction such that, with respect to the formation direction, upstream portions of the dental component to be printed are exposed to different energy levels of the light of the second wavelength as downstream portions of the dental component to be printed. As indicated above, spatially and/or temporally varying the energy of the light of the second wavelength can lead to dental components with less structural anisotropy and improved structural properties.

As an example, spatially and/or temporally varying the energy or energy intensity, respectively of the light of the second wavelength can comprise varying the energy or energy intensity, respectively of at least a part of at least one image, particularly at least one image element, e.g. a pixel, of the image, in a sequence comprising at least three energy levels E1, E2, and E3 or energy intensity levels, respectively E1, E2, and E3, wherein the energy level or energy intensity level, respectively is changed from E1 to E2, with E2>E1, and wherein the energy level or energy intensity level, respectively is changed from E2 to E3 and E2>E3 and particularly E3>E1 or E1=0, for instance. Particularly, the first energy level E1 can be assigned to one or more volume elements of the photocurable resin in which no or only little photopolymerization of the photocurable resin is desired; such volume elements of the photocurable resin can comprise volume elements which do not form part of a dental component to be printed. As such, the first energy level can also be (substantially) zero (E1=0). Particularly, the second energy level E2 can be assigned to one or more volume elements of the photocurable resin which do form part of a dental component to be printed. Specifically, the second energy level E2 can be assigned to one or more volume elements of the photocurable resin which form part of at least the first volume element of a dental component to be printed or the first volume element of a portion of the dental component to be printed with respect to the formation direction. Specifically, the third level E3 can be assigned to one or more volume elements of the photocurable resin which form part of further volume elements of the dental component to be printed which further volume elements are located behind the first volume element of three-dimensional to be printed with respect to the formation direction. Further, a fourth energy level E4 can be implemented and assigned to one or more volume elements of the photocurable resin which do not form part of the three-dimensional to be printed. Particularly, the fourth energy level E4 can be assigned to volume elements of the photocurable resin which are located behind the last volume elements of the photocurable resin which form part of the dental component to be printed. As such, the fourth energy level E4 can also be (substantially) zero (E4=0).

According to another exemplary embodiment, spatially and/or temporally varying the at least one printing parameter, particularly a printing parameter influencing the curing behavior of the photocurable resin, can comprise irradiating the photocurable resin with the light of the or a first wavelength and/or the light of the or a second wavelength while the at least one formation zone is not moving relative to the or a respective container during the at least one irradiation process or while the at least one formation zone is moved at a varied motion rate which is lower than the nominal motion rate. A respective varied motion rate can also be zero. Hence, also the motion rate at which the at least one formation zone is moved, particularly relative to the or a respective container, is a printing parameter which can be spatially and/or temporally varied, e.g. to achieve printing dental components having higher structural isotropy.

As an example, irradiating the photocurable resin with the light of the first wavelength and/or the light of the second wavelength while the at least one formation zone is not moving relative to the or a respective container during the at least one irradiation process or while the at least one formation zone is moving at a motion rate which is lower than the nominal motion rate can comprise irradiating the photocurable resin with the light of the first wavelength while the photocurable resin moves comparatively slow or does not even move relative to the container such that the respective volume elements of the photocurable resin are irradiated with the light of the first wavelength for a comparatively long period. In this period, the light of the second wavelength can comprise constant images or stationary images, for instance. Alternatively, in this period, no light of the second wavelength is irradiated into the photocurable resin and the working volume, for instance.

According to another exemplary embodiment, spatially and/or temporally varying the at least one printing parameter, particularly a printing parameter influencing the curing behavior of the photocurable resin, can also comprise irradiating the photocurable resin with the light of the or a first wavelength and/or the or a second wavelength while the at least one formation zone is moved along two different directions. Hence, also the motion direction along which the at least one formation zone is moved, particularly relative to the or a respective container, is a printing parameter which can be spatially and/or temporally varied, e.g. to achieve printing dental components having higher structural isotropy.

As an example, the at least one formation zone can be moved along a first motion path in a first motion direction while it is irradiated with the light of the or a first wavelength and/or light of the or a second wavelength, particularly while it is irradiated only with the light of the first wavelength, and the at least one formation zone is moved along a second motion path in a second motion direction, particularly opposite the first direction, while it is irradiated with the light of the first and/or the second wavelength, particularly while it is irradiated with the light of both the first and second wavelength. Particularly, the first motion direction can be a motion direction towards or away from an irradiation device, particularly a digital light projection device, of an apparatus used for implementing the method which generates the light of the second wavelength and the second motion direction can be opposition thereto, or vice versa.

As another example, the first motion path can differ, particularly in length, from the second motion path. Particularly, the first motion path can be shorter than the second motion path. As such, the irradiation of the photocurable resin with the light of the first wavelength applied to the photocurable resin when the at least one formation zone is moved along the first motion path can be shorter compared to when the at least one formation zone is moved along the second motion path.

According to another exemplary embodiment, spatially and/or temporally varying the at least one printing parameter, particularly a printing parameter influencing the curing behavior of the photocurable resin, can comprise, which particularly applies for embodiments of the method in which multiple separate dental components are to be printed, particularly simultaneously, e.g. by setting, that the start position and/or the start time and/or the end position and/or the end time for irradiating the photocurable resin with the light of the second wavelength for printing a first dental component can be different from the start position and/or the start time for irradiating the photocurable resin with the light of the second wavelength for printing a further dental component. Particularly, this exemplary embodiment can enable that the photocurable resin is still irradiated with light of the second wavelength, even though printing of at least one dental component has been completed which will result in that the respective dental component which has been completed first will have a high(er) structural fidelity. Notably, this exemplary embodiment particularly applies to lateral arrangement of the multiple dental components to be printed. As such, their respective formation directions are arranged in parallel.

According to another exemplary embodiment, the at least one irradiation process can comprise irradiating the photocurable resin with the light of the or a first wavelength and the light of the or a second wavelength to form a pre-polymerized three-dimensional pre-component in a first irradiation step, and wherein the pre-polymerized three-dimensional pre-component is irradiated with the light of the first wavelength and the second wavelength in at least one further irradiation step which causes formation of the dental component, particularly after completion of the first irradiation step. As such, also the number of respective irradiation steps can be a printing parameter which can be spatially and/or temporally varied. Notably, this embodiment can comprise the formation of a pre-polymerized pre-component in a first irradiation step, which three-dimensional pre-component can already comprise a shape and/or dimension (substantially) corresponding to the dental component which is to be printed. However, the pre-component can differ from the actual dental component which is to be printed in the degree of curing of the photocurable resin. In other words, the pre-component can have a lower degree of curing of the photocurable resin, e.g. the pre-component can have a degree of curing which does not allow handling of the pre-component for instance. Yet, printing the actual dental component via a respective intermediate pre-component can result in improved structural properties of the actual dental component.

As an example, the photocurable resin can be irradiated with the light of the or a first wavelength and the or a second wavelength to form a pre-polymerized pre-component in a first irradiation step, wherein the pre-polymerized pre-component is irradiated with the light of the first wavelength and the second wavelength which causes further polymerization of the pre-polymerized pre-object in a second irradiation step, and wherein the second irradiation step can be repeated multiple times. Notably, the formation zone can be moved along a first motion path in a first motion direction in the first irradiation step and along a second motion path in a second motion direction, particularly opposite the first motion direction, in the at least one second irradiation step.

Generally, the photocurable resin can be irradiated with the light of the or a first wavelength forming a pre-polymerized photocurable resin in a first irradiation step, and wherein the pre-polymerized photocurable resin is irradiated with the light of the first wavelength and the second wavelength in at least one further irradiation step which causes formation of the dental component to be printed, particularly after completion of the first irradiation step.

Particularly, the photocurable resin can be irradiated with the light of the first and the second wavelength forming a pre-polymerized photocurable resin in a first irradiation step, and wherein the pre-polymerized photocurable resin is irradiated with the light of the first wavelength and the second wavelength in at least one further irradiation step which causes formation of the dental component to be printed, particularly after completion of the first irradiation step. Particularly, the intensity light of the first wavelength in the first irradiation step can be of an intensity lower than the intensity required for curing or solidification of the photocurable resin or the intensity required for causing formation of the dental component to be printed, respectively. Particularly, the intensity light of the second wavelength in the first irradiation step can be of an intensity lower than the intensity required for curing or solidification of the photocurable resin or the intensity required for causing formation of the dental component to be printed, respectively. Particularly, in the first irradiation step the intensity distribution of the light of the second wavelength is inhomogeneous. More particularly, in the first irradiation step, the light of the second wavelength can have a lower intensity in outer regions adjacent to the walls of the container delimiting the working volume and a respectively higher intensity in inner regions of the working volume, such as e.g. in the middle of the working volume. As an example, the light of the second wavelength can be projected as an image having higher intensity in respective inner regions. A respective image can be a gray or white image, for example. Also printing the actual dental component via a respective intermediate pre-polymerized photocurable resin can result in improved structural properties of the actual dental component to be printed.

According to another exemplary embodiment, the formation time of the dental component can be at most 1 min per 1 mm extension of the dental component in the at least one direction. As such, the method can be implemented with high printing speeds which is another exemplary printing parameter which can influence the curing behavior of the photocurable resin.

According to another exemplary embodiment, the formation time of the dental component can be at least 1 min per 1 mm extension of the dental component in the at least one direction. Particularly, the formation time of the dental component can be at least 2 min per 1 mm extension of the dental component in the at least one direction. More particularly the formation time of the dental component can be at least 4 min per 1 mm extension of the dental component in the at least one direction. As such, the method can be implemented with high printing speeds which is another exemplary printing parameter which can influence the curing behavior of the photocurable resin. Surprisingly, a high speed for the formation leads to an improved structural fidelity, although a lower resolution in the formation direction would be expected.

According to another exemplary embodiment, the method can comprise a step of conducting at least one measure to modify the optical properties of the dental component. The method can thus, comprise in addition to a first step which comprises at least one volumetric printing process in which a photopolymerizable material is irradiated with light of at least one wavelength to form at least one dental component, a separate second step of conducting at least one measure to modify the optical properties of the dental component after the first step in which the dental component has been printed. The method therefore, enables deliberately modifying the optical properties, particularly the absorption properties, of the dental component which result from the volumetric 3d-printing process in the visible wavelength range. As such, a dental component can generally be provided with modified optical properties, particularly modified absorption properties, after completion of the first step. As an example, a dental component can initially have a first color or coloring, respectively resulting from the volumetric printing process and is transparent, i.e. has no color or coloring, respectively after completion of the second step. Particularly, the resulting optical properties, particularly the resulting absorption properties, of the dental component after completion of the second step may result in that the dental component is transparent in the visible wavelength range. Hence, the dental component can show no or only little absorption in the visible wavelength range after completion of the second step. Transparency in the visible wavelength range typically means that the transmission of the dental component in the visible wavelength range is above 80% or absorbance of the dental component in the visible wavelength range is below 0.5, particularly below 0.3, respectively. The absorption and/or transmission of the dental component object can be determined/measured with a UV-Vis-NIR spectrophotometer of the type "Cary 50" available from Agilent Technologies, Inc., for instance.

Particularly, the at least one measure of conducting at least one measure to modify the optical properties of the dental component can comprise modifying the optical properties of the dental component resulting in that an average transmission or an integral of the transmission between 300 nm and 2000 nm, particularly 350 nm and 900 nm, more particularly 400 nm and 800 nm, is increased by at least 1%, particularly at least 2 %, more particularly at least 3%, more particularly at least 4%, more particularly at least 5%, more particularly at least 7.5%, more particularly at least 10%, more particularly at least 15%, more particularly at least 20%, more particularly at least 25%, more particularly at least 30%, more particularly at least 35%, more particularly at least 40%, more particularly at least 40%, more particularly at least 60%, more particularly at least 80%, more particularly at least 90%, particularly relative to a state of the dental component before it has undergone the at least one measure.

Particularly, the at least one measure of conducting at least one measure to modify the optical properties of the dental component can comprise modifying the optical properties of the dental component resulting in that an average absorption or an integral of the absorption between 300 nm and 2000 nm, particularly 350 nm and 900 nm, more particularly 400 nm and 800 nm, is decreased by at least 1%, particularly at least 2%, more particularly at least 3%, more particularly at least 4%, more particularly at least 5%, more particularly at least 7.5%, more particularly at least 10%, more particularly at least 15%, more particularly at least 20%, more particularly at least 25%, more particularly at least 30%, more particularly at least 35%, more particularly at least 40%, more particularly at least 40%, more particularly at least 60%, more particularly at least 80%, more particularly at least 90%, particularly relative to a state of the dental component before it has undergone the at least one measure. Alternatively, a dental component can initially have a first color or coloring, respectively resulting from the volumetric 3d-printing process and have a second color or coloring, respectively, the second color or coloring, respectively having a reduced absorption in the visible wavelength range relative to the first color or coloring, respectively, after completion of the second step. Hence, the dental component can show reduced absorption in the visible wavelength range after completion of the second step as compared to its absorption in the visible wavelength range after completion of the first step.

Particularly, any absorption and/or transparency value can refer to a thickness of the dental component of 1 mm. Alternatively, any absorption and/or transparency value can refer to the maximum path length of the light passing through the dental component.

The second step is conducted when the first step has been completed. Completion of the first step, i.e. completion of the printing process of a dental component is typically, given when no further photopolymerization is effected in the working volume of a respective volumetric printing apparatus by irradiating the photopolymerizable material in the working volume of the volumetric printing apparatus with at least one radiation device of the volumetric printing apparatus for forming the dental component or a green state of the dental component. Particularly, completion of the printing process of a dental component is given when the printed dental component has a pre-defined geometric configuration, particularly a pre-defined shape, or the green state of the dental component has a pre-defined shape. A respective green state typically, represents the pre-defined geometric configuration, i.e. all geometric features and the base shape, of the dental component, however the green state can have different dimensions and a lower degree of polymerization than the final dental component. As such, after completion of the first step, the printed dental component can still be disposed in the working volume of the volumetric printing apparatus in which it has been printed. Hence, the second step can be conducted when the dental component which has been printed in the first step is still within the working volume of the volumetric printing apparatus used for carrying out the first step.

The at least one measure can comprise modifying the optical properties of the dental component resulting in a decrease of the absorption properties of the dental component for at least one wavelength in a wavelength range between 300 nm and 2000 nm, particularly 350 nm and 900 nm, and/or in an increase of the transmissive properties of the dental component for at least one wavelength in the wavelength range between 300 nm and 2000 nm, particularly in the wavelength range between 350 nm and 900 nm, more particularly in the wavelength range between 400 nm and 800 nm.

Further, the at least one measure of conducting at least one measure to modify the optical properties of the dental component can comprise modifying the optical properties of the dental component resulting in that an average transmission or an integral of the transmission between 300 nm and 2000 nm, particularly between 350 nm and 900 nm, more particularly between 400 nm and 800 nm, is increased by at least 1%, particularly at least 2%, more particularly at least 3%, more particularly at least 4%, more particularly at least 5%, more particularly at least 7.5%, more particularly at least 10%, more particularly at least 15%, more particularly at least 20%, more particularly at least 25%, more particularly at least 30%, more particularly at least 35%, more particularly at least 40%, more particularly at least 45%, more particularly at least 50%, particularly relative to a state of the dental component before it has undergone the at least one measure; and/or wherein
Further, the at least one measure of conducting at least one measure to modify the optical properties of the dental component can comprise modifying the optical properties of the dental component resulting in that an average absorption or an integral of the absorption between 300 nm and 2000 nm, particularly between 350 nm and 900 nm, more particularly between 400 nm and 800 nm, is decreased by at least 1%, particularly at least 2 %, more particularly at least 3%, more particularly at least 4%, more particularly at least 5%, more particularly at least 7.5%, more particularly at least 10%, more particularly at least 15%, more particularly at least 20%, more particularly at least 25%, more particularly at least 30%, more particularly at least 35%, more particularly at least 40%, more particularly at least 45%, more particularly at least 50%particularly relative to a state of the dental component before it has undergone the at least one measure.

Further, the at least one measure can comprise modifying the optical properties of the dental component resulting in an average or integrated absorption per mm of thickness of the dental component of less than 0.5, particularly less than 0.3, more particularly less than 0.2, more particularly less than 0.1 , in a wavelength range between 300 nm and 2000 nm, particularly 350 nm and 900 nm, more particularly between 400 nm and 800 nm.

Further, the absorption per mm of thickness of the dental component can be less than 0.5, particularly less than 0.3, more particularly less than 0.2, more particularly less than 0.1 , for each wavelength in the wavelength range between 300 nm and 2000 nm, particularly between 350 nm and 900 nm, more particularly between 400 nm and 800 nm.

Further, the at least one measure can comprise a thermal treatment of the dental component which thermal treatment comprises tempering the dental component for a specific time at at least one specific temperature. Particularly, the specific time can range between 0,5 min and 60 min, particularly between 1 min and 30 min and/or the at least one specific temperature can range between 50°C and 150°C, particularly between 75°C and 125°C.

Further, the at least one measure can comprise an optical treatment of the dental component which optical treatment comprises irradiating the dental component with light of at least one specific wavelength for a specific time with a specific light intensity. Particularly, the specific time can range between 0,5 min and 180 min, particularly between 5 min and 60 min and/or the at least one specific wavelength can range between 350 nm and 1000 nm, particularly between 400 nm and 800 nm, more particularly between 350 nm and 500 nm or between 420 nm and 800 nm.

Further, the dental component can be irradiated for the specific time and light intensity with the light of the at least one specific wavelength while the dental component is in a working volume in which it has been formed in the first step.

Further, the dental component can be subject to tempering after irradiating the dental component for the specific time with light of the at least one specific wavelength, wherein the tempering particularly comprises heating the dental component to a temperature ranging between 50°C and 150°C for a time ranging between 1 min and 60 min, particularly 5 min and 30 min.

Further, the at least one measure can comprise a chemical treatment of the dental component which chemical treatment comprises chemically altering, particularly via oxidizing and/or reducing chromophore molecules, particularly residual photoinitiator molecules, of the dental component, the molecules having a (visible) color in the visible wavelength spectrum ranging between 380 nm and 750 nanometers with at least one chemical modifying agent. Particularly, the at least one chemical modifying agent can be added to the photocurable resin before and/or during formation of the dental component. Particularly, the at least one chemical modifying agent can be added to the photopolymerized resin after forming the dental component by placing the dental component in a solution containing the at least one chemical modifying agent for a specific time, wherein the at least one chemical modifying agent migrates from the solution into the dental component, and optionally residual co-initiator and/or photoinitiator migrates from the dental component into the solution. Particularly, the solution can comprise a solvent, particularly an inert organic solvent, e.g. cyclohexane or ethanol. Particularly, the at least one chemical modifying agent can be a gas, wherein the dental component is disposed in an atmosphere containing the gas. Particularly, the at least one chemical modifying agent can be configured to alter the chromophore properties of initial chromophores, particularly residual photoinitiator molecules, of the photopolymerizable material and/or chromophores resulting from the photopolymerization process, of the dental component or the at least one chemical modifying agent is configured to generate a reactive agent configured to alter the chromophore properties of the chromophore molecules, particularly residual photoinitiator molecules, of the dental component under the influence of electromagnetic energy, particularly thermal energy and/or radiation energy. Particularly, the at least one chemical modifying agent can be or comprise at least one of an oxidizing agent, particularly an oxidizing acid, particularly a peroxyacid, or at least one reducing agent, particularly a reducing base, or a salt, particularly a sulfonium salt or an iodonium salt, configured to alter, particularly degrade, chromophores, particularly residual photoinitiator molecules, of the dental component. Particularly, the at least one chemical modifying agent can be or comprise a chlorine-based substance, particularly chlorine, hypochlorite, chlorine dioxide, or an oxygen-based substance, particularly ozone, oxygen, peroxide, perborate, percarbonate, peracetic acid, or chlorine or a chlorine-compound.

According to another exemplary embodiment, the method can comprise the following steps: generating, via the or an irradiation device configured to radiate light of a first wavelength into a working volume comprising the photocurable resin, a first light projection, wherein the first light projection comprises multiple light beams traversing the working volume in a common plane; and modulating, via at least one light modulation device assigned to the at least one first irradiation device, the spatial extension direction of two or more light beams of the multiple beams in the at least one light plane such that the two or more light beams extend in a non-parallel arrangement relative to each other.

The method can thus, be implemented with at least one light modulation device assigned to the irradiation device, wherein the at least one light modulation device is configured to modulate the spatial extension direction of two or more light beams of the multiple beams in the at least one light plane such that the two or more light beams extend in a non-parallel arrangement relative to each other, and/or to generate at least two light beams of the first wavelength which have different polarizations or polarization states in at least one point within the working volume, and/or to generate at least two light beams which have different wavelengths, particularly within a specific wavelength range, in at least one point within the working volume. The at least one light modulation device can thus, be configured to generate at least two light beams of the first wavelength which have different polarizations or polarization states in at least one point within the working volume, and/or to generate at least two light beams which have different wavelengths, particularly within a specific wavelength range, in at least one point within the working volume. This can be a separate configuration of the at least one light modulation device, particularly independent from the configuration in which the at least one light modulation device is configured to modulate the spatial extension direction of two or more light beams of the multiple beams in the at least one light plane such that the two or more light beams extend in a non-parallel arrangement relative to each other.

Principles of angular diversity can comprise generating or using light beams of the first wavelength extending at an angle relative to each other such that they intersect in at least one point, e.g. an intersection point. Particularly, principles of angular diversity can be implemented at an angle, particularly orthogonal, to the formation direction in which the dental component is to be printed, particularly to avoid or reduce a loss of resolution in the formation direction.

Principles of polarization diversity can comprise generating or using at least two light beams of the first wavelength which have different polarizations or polarization states, particularly two orthogonal polarization states, in at least one point within the working volume or the at least one formation zone, respectively. Particularly, at least one light beam can be incoherent, e.g. generated by an optical fiber or generated by combining or overlapping light of at least two different light sources. Respective different polarizations or polarization states can comprise different linear polarizations or different circular polarizations, for instance. In such embodiments, the at least one light modulation device can comprise at least one of: at least one optical fiber, at least one polarization element, such as e.g. a polarization filter, particularly a polarization filter which is rotatable about a rotation axis which can be or comprise the axis of a light beam as emitted by a light source of the first wavelength, and a beam expansion device configured to expand an incident light beam, e.g. to generate a light sheet or line-shaped beam cross-section or beam profile, respectively, and at least one collimating element, such as e.g. a collimating lens, for instance.

Principles of wavelength diversity can comprise generating or using at least two light beams of the first wavelength which have different wavelengths in at least one point within the working volume or at least one formation zone, respectively. Particularly, respective different wavelengths can be generated by a broadband light source in combination with an optical filter, e.g. a bandpass filter at varying angles of incidence. Respective different wavelengths can be wavelengths within a range of 350 nm - 500 nm, particularly 375 nm - 450 nm, more particularly 385 nm - 440 nm, more particularly 395 nm - 420 nm, more particularly 400 nm - 410 nm, for instance. In such embodiments, the at least one light modulation device can comprise at least one of: at least one optical filter element, such as e.g. a bandpass filter, particularly a bandpass filter which is moveable in at least one degree of freedom of motion, e.g. rotatable or tiltable about a rotational or tilt axis which can be or comprise the axis of a light beam as emitted by a light source of the first wavelength, and a beam expansion device configured to expand an incident light beam, e.g. to generate a light sheet or line-shaped beam cross-section or beam profile, respectively, and at least one collimating element, such as e.g. a collimating lens, for instance.

Specifically, the at least one light modulation device can be configured to affect, particularly to at least partly reduce, the optical coherence of light beams within the at least one light plane by deliberately changing the spatial extension direction and/or orientation of at least two light beams such that at least two light beams extend in a non-parallel arrangement relative to each other which results in that two or more light beams intersect at one or more intersection points within the at least one light plane. Changing the spatial extension direction and/or orientation of at least two light beams such that at least two light beams extend in a nonparallel arrangement relative to each other within the at least one light plane also results in that the at least one light plane comprises light beams having angled spatial extension directions while traversing, travelling or propagating through the working volume. Specifically, at least two light beams can traverse, travel or propagate through the working volume at an angle different from 0° relative to each other. An intersection of at least two light beams at one or more intersection points within the at least one light plane can also comprise that at least two light beams can overlay at the one or more intersection points.

The at least one light modulation device can thus be configured to direct, e.g. by diffusing and/or scattering, two or more light beams within the at least one light plane resulting in that the at least one light plane comprises non-parallel and/or non-coherent light beams, respectively. Directing light beams can comprise modifying the spatial extension direction of one or more light beams, particularly with respect to an original spatial extension direction, with the result that the at least one light plane comprises non-parallel and/or non-coherent light beams, respectively. This is just the opposite working principle of conventional light sheet generators which are configured to generate light sheets comprising non-intersecting collimated light beams, i.e. light beams having a parallel spatial extension direction without intersections. As a consequence, in contrast to conventional light sheets substantially having a rectangular base shape being vertically defined by a parallel arrangement of uppermost and lowermost light beams, the at least one light plane as modified by the at least one light modulation device can have a non-rectangular base shape within the working volume, such as e.g. a trapezoidal shape, being vertically defined by non-parallel light beams.

Particularly, the at least one light modulation device can be configured to generate modified light beams having properties different from a Gaussian beam. As such, the at least one light modulation device can be configured to generate modified light beams having a non-Gaussian beam profile, for instance. As an example, the at least one light modulation device can be configured to generate modified light beams, namely Airy-beams or Bessel-beams, for instance or light beams having a characteristic similar to Airy- beams or Bessel-beams, for instance.

In configurations of the apparatus in which a first light plane is generated from light of a first light source having a first modulation device assigned thereto and a further light plane is generated from light of a further light source having a further light modulation device assigned thereto, each light plane can have a non- rectangular base shape within the working volume. As such, since the respective non-rectangular first and further light planes can overlap in the working volume, a resulting light plane typically, also having a non- rectangular base shape within the working volume can be generated whose shape is defined by the respective shapes of the overlapping first and further light planes. In an exemplary embodiment, both a first and a further light plane can have a trapezoidal shape within the working volume such that the resulting light plane can have, at least in the working volume, a hexagon-like base shape or a hexagonal base shape. Similar considerations apply when the respective first and further light planes have other shapes than trapezoidal shapes within the working volume and/or when further light planes generated by further light sources with assigned light modulation devices are added.

In exemplary embodiments in which the at least one first irradiation device comprises two or more light sources, at least one respective light modulation device can be assigned to each respective light source.

Experimental results have surprisingly shown that the deliberate generation of respective intersection points at which two or more light beams intersect in the at least one light plane can significantly reduce respective undesired artefacts and thus, undesired properties, such as (quasi) regular or irregular striping or striation artefacts, resulting in an optical appearance of the manufactured dental component as if it was built in layers as in conventional additive manufacturing, such as stereo lithography principles and/or digital light processing principles, for instance. The at least one light modulation device thus has a positive effect on the properties of dental components manufactured with the apparatus.

A second aspect of the invention relates to an apparatus for volumetric printing a dental component by photopolymerization, particularly by multi-color photopolymerization, of a photocurable resin. The apparatus comprises an irradiation device for performing an irradiation process of irradiating, particularly on basis of a plurality of printing parameters, a photocurable resin with light of at least one wavelength to form, by photopolymerization, particularly by multi-color photopolymerization, more particularly by dual-color photopolymerization, a dental component. The apparatus is configured to implement the method of the first aspect of the invention such that all remarks made in connection with the method of the first aspect of the invention also apply to the apparatus of the second aspect of the invention, and vice versa.

The apparatus typically comprises a hardware- and/or software-embodied controller which can be configured to spatially and/or temporally vary at least one printing parameter, particularly a printing parameter influencing the curing (behavior) of the photocurable resin, during the at least one irradiation process.

The apparatus can be configured to form at least one dental component via volumetric printing based on photopolymerization, particularly multi-color photopolymerization, more particularly dual-color polymerization, of a photocurable resin. The term "dental component" thus, particularly refers to a dental component which is generally ready to be used (except for possible post-processing steps).

The apparatus can be or comprise a volumetric 3d-printing apparatus, particularly a xolography apparatus, i. e. an apparatus configured to perform the base principles of xolography. The base principles of xolography are specified in WO 2020/245456 A1, the contents of which are incorporated herein by reference. Likewise, the apparatus can be or comprise an apparatus configured to implement a so-called, computed axial lithography, CAL, process, for instance. Likewise, the apparatus can be or comprise an apparatus as specified in WO2024163474A1, the contents of which are incorporated herein by reference, for instance. Likewise, the apparatus can be or comprise an apparatus configured to implement cone beam lithography or parallax manufacturing as specified above.

The apparatus typically comprises a container for receiving photocurable resin. The container can be moveably supported in at least one direction. The at least one direction can be or comprise the formation direction of a respective dental component to be printed.

The apparatus can further comprise a dual-color irradiation device configured to irradiate a photocurable resin inside the or a respective container. The dual-color irradiation device is configured to irradiate the photocurable resin with light of a first wavelength and, particularly simultaneously, with light of a second wavelength different from the first wavelength. The dual-color irradiation device can comprise at least one first irradiation apparatus comprising at least one first light source for generating the light of the first wavelength and at least one second irradiation apparatus comprising at least one second light source for generating the light of the second wavelength. The dual-color irradiation device can be configured to generate a light sheet from the light of the first wavelength, wherein the light sheet extends in a light sheet plane. Further, the dual-color irradiation device can be configured to generate a light projection of the light of the second wavelength, wherein the light projection intersects with the light sheet at an intersection angle, particularly an intersection angle of (ca.) 90°. A light projection of the light of the second wavelength can be generated with multiple light beams of the second wavelength which are emitted simultaneously or sequentially. As such, a light projection of the light of the second wavelength can comprise at least one of the following: an image of the light of the second wavelength which image can comprise image elements, such as e.g. pixels, of different intensities which results in an inhomogeneous or homogeneous intensity distribution of the image; or a sequential hatching of different locations, which can comprise e.g. points or lines, which result in an image of the light of the second wavelength which image can comprise image elements, such as e.g. pixels, of different intensities which results in an inhomogeneous or homogeneous intensity distribution of the image.

The at least one first irradiation apparatus can thus, comprise at least one light source configured to irradiate light of a first wavelength towards the photocurable resin to generate at least one first light projection forming a light sheet. A respective light sheet can comprise multiple light beams extending in a common plane. The at least one first irradiation apparatus can be built as or comprise a laser or light emitting diode, for instance. The at least one first irradiation apparatus can further comprise at least one optical element which can e.g. comprise at least one of: a Powell-lens, a cylindrical lens, a diffractive optical element, a beam expanding element, a collimating optical element, etc. Additionally or alternatively, the at least one first irradiation apparatus can comprise a light deflection unit, such as e.g. a (moveable or rotatable) mirror, a galvo-scanner, or a polygon scanner, for deflecting light towards the photocurable resin. The at least one first irradiation apparatus can be configured to vary the focus or at least one focus parameter, particularly at least one of: the focus position, the focal length, the depth of focus, or the depth of field, of at least one respective first light projection within the working volume. Particularly, the at least one first irradiation apparatus can be configured to vary the focus or at least one focus parameter with respect to the size of the formation zone. The at least one first irradiation apparatus can comprise one or more controllers configured to vary the focus or at least one focus parameter, particularly at least one of: the focus position, the focal length, the depth of focus, or the depth of field, of at least one respective first light projection within the working volume. Additionally or alternatively, the at least one first irradiation apparatus can comprise one or more optical elements, such as e.g. lenses, particularly adaptable or adjustable lenses, which are configured to vary the focus or at least one focus parameter, particularly at least one of: the focus position, the focal length, the depth of focus, or the depth of field, of at least one respective first light projection within the working volume. The light emitted or irradiated by the at least one first irradiation apparatus can comprise a wavelength in the range of: 350 nm - 500 nm, particularly 375 nm - 450 nm, more particularly 385 nm - 440 nm, more particularly 395 nm - 420, more particularly 400 nm - 410 nm, for instance. The light of the first wavelength can comprise a spectrum of wavelengths, particularly at least partly covering the respective ranges. As an example, the first wavelength can be ca. 375 nm. Typically, the first wavelength will be chosen at least under consideration of the photochemical properties, particularly the photochromic properties, of molecules of a photoinitiator of the photocurable resin.

The at least one second irradiation apparatus can thus, comprise at least one second light source configured to continuously project a projection of images corresponding to a cross-sectional geometry of a dental component to be printed or a plurality of points or lines corresponding to a cross-sectional geometry of a dental component to be printed. The second irradiation apparatus can be built as or comprise an image projection device, particularly a digital light projection device, or a directed light emission device, for instance. The at least one second irradiation apparatus can further comprise one or more light projection optics. The at least one second irradiation apparatus can be configured to change the size of at least one image of the projection of images or of at least one image element, such as e.g. a pixel, of at least one image of the projection of images. The at least one second irradiation apparatus can comprise one or more controllers configured to change the size of at least one image of the projection of images or of at least one image element, such as e.g. a pixel, of at least one image of the projection of images. Additionally or alternatively, the at least one second irradiation apparatus can comprise one or more optical elements, such as e.g. lenses, which are configured to change the size of at least one image of the projection of images or of at least one image element, such as e.g. a pixel, of at least one image of the projection of images. The light emitted or irradiated by the at least one second irradiation apparatus can comprise a wavelength in the range of: 400 nm - 1000 nm, particularly 425 - 750 nm, more particularly 450 - 675 nm, more particularly 500 - 650 nm, for instance. The light of the second wavelength can comprise a spectrum of wavelengths, particularly at least partly covering the respective ranges. Typically, the second wavelength will be chosen at least under consideration of the photochemical properties, particularly the photochromic properties, of molecules of a photoinitiator of the photocurable resin.

As indicated above, the dual-color irradiation device can be configured to generate a projection of images from the light of the second wavelength, wherein the light projection intersects with the light sheet at an intersection angle, particularly an intersection angle of (ca.) 90°. The dual-color irradiation device can thus, be generally configured to irradiate the light of the first wavelength at a first angle, particularly an angle of 0 - 180°, and the light of the second wavelength at a second angle, particularly an angle of 0 - 180°, relative to the main extension plane of the at least one formation zone. Respective angles can particularly, range between 15 and 165°, more particularly between 30 and 150°, more particularly between 90 and 150° or between 30 and 90°. Particularly, the light of the second wavelength can be irradiated with respect to the light of the first wavelength at an angle of 90°.

### Brief description of the drawings

With these and other advantages and features that will become hereinafter apparent, a more complete understanding of the invention can be obtained by referring to the following description of the appended drawings in which:
Fig. 1 shows a principle drawing of an apparatus for printing a dental component according to an exemplary embodiment,
Fig. 2 - 6 each show a principle drawing of spatially and/or temporally varying one or more printing parameters in accordance with exemplary embodiments, and
Fig. 7, 8 each shows a principle drawing of a dental component printed in accordance with exemplary embodiments.

### Detailed description of the drawings

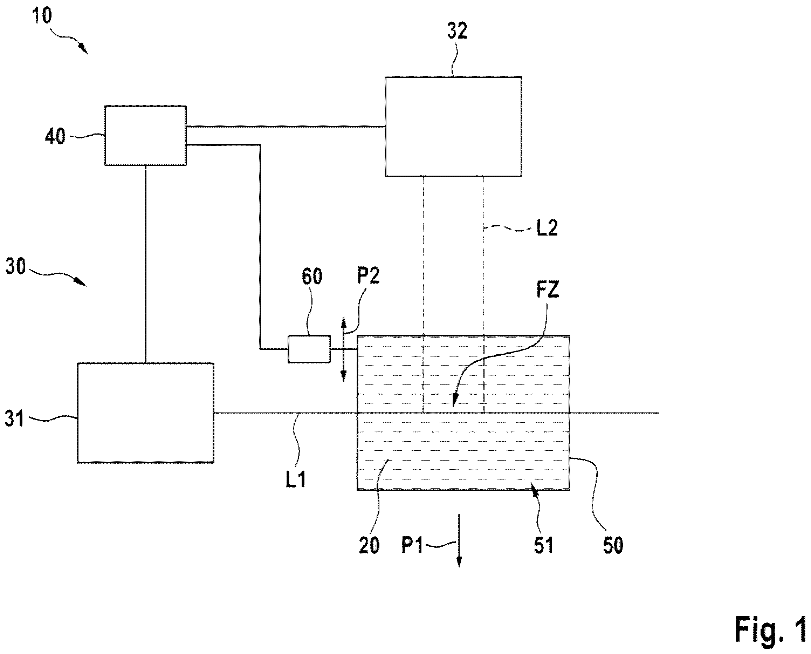

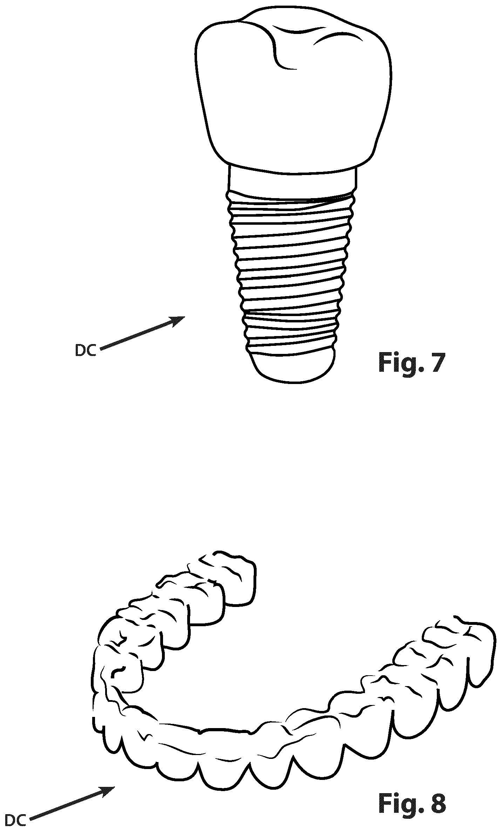

Fig. 1 shows a principle drawing of an apparatus 10 for printing at least one three-dimensional object, namely a dental component DC as exemplarily shown in Fig. 7 and 8, according to an exemplary embodiment in a schematic top-view.

The apparatus 10 is configured for volumetric printing at least one dental component by dual-color photopolymerization of a photocurable resin 20 and comprises an irradiation device 30 for performing an irradiation process of irradiating a photocurable resin 20 with light L1 of a first wavelength and light L2 of a second wavelength, different from the first wavelength, to form, by dual-color photopolymerization, a dental component in at least one direction. The direction is indicated by arrow P1 in Fig. 1 and can be or comprise the formation direction of a dental component to be printed. As is apparent from Fig. 1, the light L1 of the first wavelength and the light L2 of the second wavelength intersect in a formation zone FZ.

The light L1 of the first wavelength can comprise a light sheet comprising a plurality of light beams extending through the photocurable resin 20. Respective light beams can intersect in one or more intersection points; respective intersection points can be (substantially) arranged in a common plane which can form a light plane. Additionally or alternatively, respective light beams can comprise a light plane, for instance. A light plane can be or comprise a light plane in which the or a plurality of light beams, particularly (substantially) parallel light beams, extend adjacent such that there is no intermediate space between directly adjacent light beams. Notably, at least some of the directly adjacent light beams can also partially overlap. Alternatively, a light plane can be or comprise a light plane in which the or a plurality of light beams extend adjacent such that there is an intermediate space between directly adjacent light beams. Respective light beams can be generated by a directed light emission device, such as e.g. a laser device, which can form part of an irradiation device of a volumetric printing apparatus used for implementing the method, for instance.

The light L2 of the second wavelength can comprise a projection of images corresponding to a cross-sectional geometry of the dental component to be printed or a plurality of points or lines corresponding to a cross-sectional geometry of the dental component to be printed. Respective points or lines can form a pattern, such as e.g. a hatch pattern. A respective projection can be generated by a light projection device, such as e.g. a digital light projection device, which can form part of an irradiation device of a volumetric printing apparatus used for implementing the method. The light projection device can be or comprise a digital micromirror device (DMD) or a liquid-crystal display (LCD) configured to generate the different images corresponding to a cross-sectional geometry of a dental component which can form part of the irradiation device 30 of the apparatus 10. Additionally or alternatively, a respective point or line can be generated by a directed light emission device, such as e.g. a laser device, which can form part of the irradiation device 30 of the apparatus 10. Both the light projection device and the directed light emission device can be examples of a second irradiation apparatus 32 as will be explained further below.

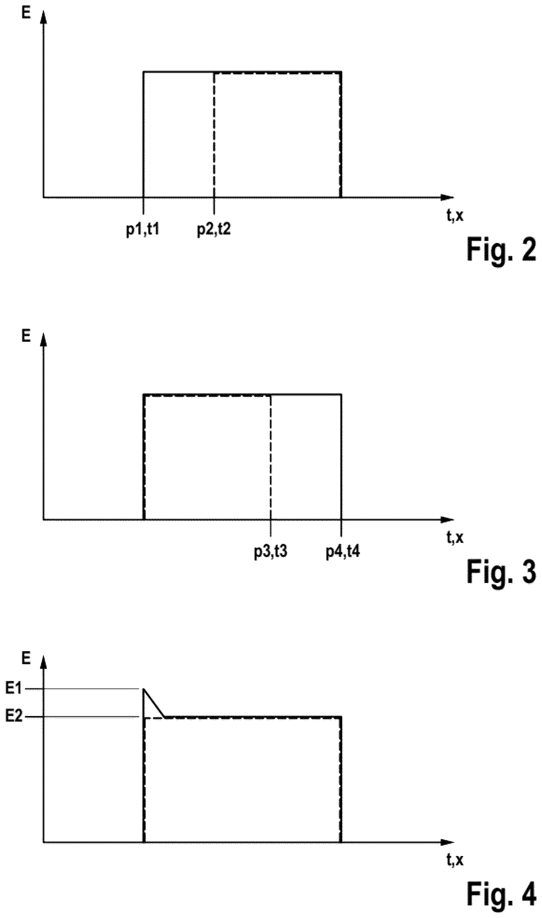

The apparatus 10 comprises a hardware- and/or software-embodied controller 40 configured to spatially and/or temporally vary at least one printing parameter, particularly a printing parameter influencing the curing (behavior) of the photocurable resin 20, during the irradiation process. The apparatus 10 can be configured to implement a method, exemplary embodiments of which will be explained in more detail in connection with Fig. 2 - 6.

Particularly, the apparatus 10 can be or comprise a volumetric 3d-printing apparatus, particularly a xolography apparatus, i. e. an apparatus configured to perform the base principles of xolography. The base principles of xolography are specified in WO 2020/245456 A1, the contents of which are incorporated herein by reference. Likewise, the apparatus 10 can be or comprise an apparatus configured to implement a so-called, computed axial lithography, CAL, process, for instance. Likewise, the apparatus 10 can be or comprise an apparatus as specified in WO2024163474A1, the contents of which are incorporated herein by reference. Likewise, the apparatus can be or comprise an apparatus configured to implement cone beam lithography or parallax manufacturing as specified above.

The apparatus 10 comprises a container 50 for receiving photocurable resin 20. The container 50 delimits a container volume 51 which can comprise a working volume in which at least one dental component can be printed. One or more walls of the container 50 can be made of a material which enables irradiating the photocurable resin inside the container 50 with the light L1, L2 of the first and the second wavelength. A respective material can thus be a transparent material with respect to the light L1, L2 of the first and second wavelength. A respective transparent material can be or comprise glass or a polymer, such as e.g. polycarbonate, polymethylmethacrylate, or cyclic olefin copolymer, for instance.

The container 50 can be moveably supported in at least one direction (indicated by double-arrow P2 in Fig. 1) e.g. via an associated drive device 60, e.g. an electric motor. As is apparent from Fig. 1, the at least one direction can be or comprise the formation direction of a respective dental component to be printed. Notably, the drive device 60 could also be associated with a first irradiation apparatus 31 of the irradiation device 30 of the apparatus 10 to move the first irradiation apparatus 31 in analogous manner in at least one direction.

The apparatus 10 further comprises the irradiation device 30 which can be a dual-color irradiation device configured to irradiate the photocurable resin inside the container 50 with the light L1, L2 of the first and second wavelength. Particularly, the irradiation device 30 can be configured to simultaneously irradiate the photocurable resin 20 inside the container 50 with the light L1, L2 of the first and second wavelength. The irradiation device 30 can be configured to generate a light sheet from the light L1 of the first wavelength, wherein the light sheet extends in a light sheet plane. Further, the irradiation device 30 can be configured to generate e.g. a light projection from the light L2 of the second wavelength, wherein the light projection intersects with the light sheet at an intersection angle, particularly an intersection angle of (ca.) 90°.

As is apparent from Fig. 1, the irradiation device 30 can comprise a first irradiation apparatus 31 comprising at least one first light source for generating and emitting the light L1 of the first wavelength and a second irradiation apparatus 32 comprising at least one second light source for generating and emitting the light L2 of the second wavelength.

The first irradiation apparatus 31 can comprise at least one light source configured to generate and irradiate light L1 of the first wavelength towards the photocurable resin 20 to generate a light sheet. The first irradiation apparatus 31 can be built as or comprise a laser or light emitting diode, for instance. The first irradiation apparatus 31 can further comprise at least one optical element which can e.g. comprise at least one of: a Powell-lens, a cylindrical lens, a diffractive optical element, a beam expanding element, a collimating optical element, etc. Additionally or alternatively, the first irradiation apparatus 31 can comprise a light deflection unit, such as e.g. a (moveable, particularly rotatable) mirror, a galvo-scanner, or a polygon scanner, for deflecting light towards the photocurable resin 20. The first irradiation apparatus 31 can be configured to vary the focus or focus parameter, particularly at least one of: the focus position, the focal length, the depth of focus, or the depth of field, of at least one respective first light projection within the working volume. Particularly, the first irradiation apparatus 31 can be configured to vary the focus or at least one focus parameter with respect to the size of the formation zone. The first irradiation apparatus 31 can comprise one or more controllers configured to vary the focus or a focus parameter, particularly at least one of: the focus position, the focal length, the depth of focus, or the depth of field, of at least one respective first light projection within the working volume. Additionally or alternatively, the first irradiation apparatus 31 can comprise one or more optical elements, such as e.g. lenses, particularly adaptable or adjustable lenses, which are configured to vary the focus or a focus parameter, particularly at least one of: the focus position, the focal length, the depth of focus, or the depth of field, of at least one respective first light projection within the working volume. The light L1 generated by the first irradiation apparatus 31 can comprise a wavelength in the range of: 350 nm - 500 nm, particularly 375 nm - 450 nm, more particularly 385 nm - 440 nm, more particularly 395 nm - 420, more particularly 400 nm - 410 nm, for instance. The light L1 of the first wavelength can comprise a spectrum of wavelengths, particularly at least partly covering the respective ranges. As an example, the first wavelength can be ca. 375 nm. Typically, the first wavelength will be chosen at least under consideration of the photochemical properties, particularly the photochromic properties, of molecules of a photoinitiator of the photocurable resin 20.

The second irradiation apparatus 32 can comprise at least one second light source configured to continuously emit images of light L2 of the second wavelength towards the photocurable resin 20, wherein each image can correspond to a specific cross-section of a dental component to be printed, or a plurality of points or lines corresponding to a cross-sectional geometry of a dental component to be printed. The second irradiation apparatus 32 can be built as or comprise an image projection device, particularly a digital light projection device, or a directed light emission device, for instance. The second irradiation apparatus 32 can further comprise one or more light projection optics. The second irradiation apparatus 32 can thus generate image elements, such as e.g. voxels, having a specific focus and/or size, for instance. The second irradiation apparatus 32 can be configured to change the size of at least one image of the projection of images or of at least one image element, such as e.g. a pixel, of at least one image of the projection of images. The second irradiation apparatus 32 can comprise one or more controllers configured to change the size of at least one image of the projection of images or of at least one image element, such as e.g. a pixel, of at least one image of the projection of images. Additionally or alternatively, the second irradiation apparatus 32 can comprise one or more optical elements, such as e.g. lenses, which are configured to change the size of at least one image of the projection of images or of at least one image element, such as e.g. a pixel, of at least one image of the projection of images. The light L2 emitted or irradiated by the second irradiation apparatus 32 can comprise a wavelength in the range of: 400 nm - 1000 nm, particularly 425 - 750 nm, more particularly 450 - 675 nm, more particularly 500 - 650 nm, for instance. The light L2 of the second wavelength can comprise a spectrum of wavelengths, particularly at least partly covering the respective ranges. Typically, the second wavelength will be chosen at least under consideration of the photochemical properties, particularly the photochromic properties, of molecules of a photoinitiator of the photocurable resin 20.

As is apparent from above, the irradiation device 30 can be generally configured to irradiate the light L1 of the first wavelength at a first angle, particularly an angle of 0 - 180°, and the light L2 of the second wavelength at a second angle, particularly an angle of 0 - 180°, relative to the extension direction of the light L1 of the first wavelength. Respective angles can particularly, range between 15 and 165°, more particularly between 30 and 150°, more particularly between 90 and 150° or between 30 and 90°. Particularly, the light L2 of the second wavelength can intersect the light L1 of the first wavelength at an angle of 90° (as is exemplarily shown in Fig. 1).

Irradiating the photocurable resin 20 with the light L1 of the first wavelength causes one or more photoinitiator molecules of the photocurable resin 20 to transfer from an initial state into an intermediate state with changed optical properties compared to the initial state, such that the molecules of the one or more photoinitiators in the intermediate state can absorb the light L2 of the second wavelength which results in that the molecules of the one or more photoinitiators are transferred from the intermediate state to a reactive state by absorption of light L2 of the second wavelength which locally triggers the polymerization of the photocurable resin 20 to form at least one three-dimensional object.

The photocurable resin 20 can be a photocurable monomer resin or a photocurable oligomer resin, which may include acrylates, methacrylates, thiol + ene, epoxides, oxiranes, oxetanes, or vinylethers, for instance. Multi-color photopolymerization can comprise multi-photon photopolymerization, particularly dual-photon photopolymerization, of the photocurable resin 20. Photopolymerization of the photocurable resin 20 is thus, effected by irradiating the photocurable resin 20 with the light L1 of the first wavelength and, particularly simultaneously, the light L2 of the second wavelength which results in that molecules of the one or more photoinitiators of the photocurable resin 20 are converted, e.g., due to the absorption of the light L1 of the first wavelength, from an initial state in which the molecules of the one or more photoinitiators (substantially) do not absorb the light L2 of the second wavelength, into an intermediate state with changed optical properties compared to the initial state, such that the molecules of the one or more photoinitiators in the intermediate state absorb the light L2 of the second wavelength which results in that the molecules of the one or more photoinitiators are transferred from the intermediate state to a reactive state which locally triggers the polymerization of the photocurable resin 20 to form at least one three-dimensional object.

Suitable photoinitiators of a respective photocurable resin 20 are e.g. known from US5230986A, WO2020245456A1, WO2023034398A1, WO2023034402A1, WO2023220461A1, WO2023220463A1, the contents of which are incorporated herein by reference.

Fig. 7 and 8 each illustrate a principle drawing showing an exemplary embodiment of a dental component DC which can be manufactured in accordance with the apparatus 10 and a method for volumetric printing implemented with the apparatus 10, respectively.

In the exemplary embodiment of Fig. 7, the dental component DC is a dental prosthesis, namely a dental implant. The term "dental implant" can refer to an implant assembly which comprises a root and a crown which are connected with each other via at least one abutment element, possibly via at least one connection element, such as e.g. a screw assigned to the at least one abutment element. Each element of a respective implant assembly can be deemed a dental component.

Exemplary and thus, non-limiting embodiments of dental components DC which can be manufactured in accordance with the method are thus, a dental prosthesis, particularly a dental implant (such as e.g. the one shown in Fig. 7), a bridge, or an inlay, overlay, etc. As such, a dental component DC which can be manufactured in accordance with the method can be or comprise at least one of: a dental prosthesis, particularly a dental implant, a bridge, or an inlay, overlay, etc. The term "dental implant" can refer to an implant assembly which comprises a root and a crown which are connected with each other via at least one abutment element, possibly via at least one connection element, such as e.g. a screw assigned to the at least one abutment element. Each element of a respective implant assembly can be deemed a dental component.

In the exemplary embodiment of Fig. 8, the dental component DC is an orthodontic device for positioning and/or orienting one or more teeth, such as e.g. an aligner or a dental brace respectively, which is used to adjust the position and/or orientation of one or more teeth. As such, a dental component DC which can be manufactured in accordance with the method can be or comprise an orthodontic device for positioning and/or orienting one or more teeth, such as e.g. an aligner or a dental brace respectively, which is used to adjust the position and/or orientation of one or more teeth.

Further exemplary and thus, non-limiting embodiments of dental components DC which can be manufactured in accordance with the method are an orthodontic device for positioning and/or orienting one or more teeth, such as e.g. an aligner or a dental brace respectively, which is used to adjust the position and/or orientation of one or more teeth. As such, a dental component DC which can be manufactured in accordance with the method can be or comprise an orthodontic device for positioning and/or orienting one or more teeth, such as e.g. an aligner or a dental brace respectively, which is used to adjust the position and/or orientation of one or more teeth.

Further exemplary and thus, non-limiting embodiments of dental components DC which can be manufactured in accordance with the method are: a bridge; an inlay; an overlay; a veneer; an occlusal appliance, such as e.g. a bite splint, a retainer, a mouthguard, a migraine prevention device, etc.; a mandibular advancement device, such as one useable as a dental sleep medicine; a removable, such as e.g. a denture, a partial, a combination of a crown and a partial, a flipper, etc.; etc.

For printing dental components DC, the photocurable resin 20 can comprise at least one inorganic additive. The at least one inorganic additive serves for adjusting the properties of the at least one dental component DC, particularly with respect to a desired or intended use of the at least one dental component DC. Non-limiting examples of respective inorganic additives are provided in the following:
As an example, a respective inorganic additive can be or comprise a bone material, a bone replacement material, a bone composite material or a bone replacement composite material. As such, the dental component DC can be provided with, due to the presence of at least one respective inorganic additive, properties similar to a tooth (which can also depend on other factors such as e.g. the amount of the inorganic additive provided with the photocurable resin). Each of a bone material, a bone replacement material, a bone composite material, and a bone replacement composite material can comprise components of bone mineral such as e.g. calcium compounds, particularly calcium phosphate compounds (apatite), carbonate compounds, phosphate compounds, etc. Generally, the expression bone material or bone composite material can be or comprise natural bone material or synthetic bone materials.

As another example, the at least one inorganic additive can be selected from a metal, particularly a biocompatible metal, or a metal alloy, particularly a biocompatible metal alloy. As such, the dental component DC can be provided with, due to the presence of at least one respective inorganic additive, properties similar to a tooth (which can also depend on various factors such as e.g. the amount of the inorganic additive provided with the photocurable resin). Exemplary metals or metal alloys, can comprise precious metals, such as e.g. gold, silver, copper, etc.; cobalt-chrome alloys; iron-based-alloys, such as e.g. steel, etc.; titanium or titanium alloys, etc.

As another example, the at least one inorganic additive can be selected from a ceramic, particularly a biocompatible ceramic, or a ceramic composition, particularly a biocompatible ceramic composition. As such, the dental component DC can be provided with, due to the presence of at least one respective inorganic additive, properties similar to a tooth (which can also depend on various factors such as e.g. the amount of the inorganic additive provided with the photocurable resin). Exemplary ceramics or ceramic compositions can comprise zirconia (zirconium dioxide), for instance.

Generally, the at least one inorganic additive can be present within the photocurable resin 20 in an amount ranging between 0,1 and 75 wt.-%, particularly in an amount ranging between 0,1 and 50 wt.-%, particularly in an amount ranging between 0,1 and 25 wt.-%. As indicated above, the amount of the inorganic additive can be (in addition to other parameters such as e.g. its type, chemistry, shape, size, etc.) a parameter for influencing and customizing, respective, the properties of the dental component DC to be printed and will thus, be typically selected with respect to a concrete intended use of the dental component DC to be printed.

Generally, the at least one inorganic additive can be or comprise a solid. Particularly, the at least one inorganic additive can comprise particles. As such, the at least one inorganic additive can be or comprise a particulate material which can e.g. ease preparing, e.g. by stirring, a mixture - a respective mixture can be a colloid or a dispersion, for instance - of the photocurable resin 20 and the at least one inorganic additive with a desired distribution of the inorganic additive particles within the photocurable resin 20. A desired distribution is typically a homogenous distribution of the inorganic additive particles within the photocurable resin 20.

As an example, respective particles of the at least one inorganic additive can comprise at least one of the following shapes: a spherical shape or a non-spherical shape, particularly a plate-like shape or a longitudinal shape or an ellipsoid shape. Also the shape of the particles can be (in addition to other parameters such as e.g. its type, chemistry, size, etc.) a parameter for influencing and customizing, respectively, the properties of a dental component DC to be printed and will thus, be typically selected with respect to a concrete intended use of the dental component DC to be printed.

As an example, respective particles of the at least one inorganic additive can comprise a spatial extension of less than 10 µm, particularly less than 9 µm, more particularly less than 8 µm, more particularly less than 7 µm, more particularly less than 6 µm, more particularly less than 5 µm, more particularly less than 4 µm, more particularly less than 3 µm, more particularly less than 2 µm, more particularly less than 1 µm, more particularly less than 100 nm, more particularly less than 10 nm, more particularly less than 1 nm. The expression "spatial extension" can depend on the shape or base shape, respectively of the respective particles. For particles having a spherical shape or spherical base shape, respectively, the expression "spatial extension" can refer to a diameter, particularly a mean diameter, for particles having an ellipsoid shape or ellipsoid base shape, respectively, the expression "spatial extension" can refer to the long diameter or the short diameter, particularly the long diameter, of the particles. For particles having a plate-like shape or plate-like base shape, respectively, having a longitudinal axis, the expression "spatial extension" can refer to an extension along the longitudinal axis. For particles having a longitudinal shape or longitudinal base shape, respectively, the expression "spatial extension" can refer to an extension along the longitudinal axis of a respective particle or to the maximum distance between the edges of a respective particle.

Specifically, the particles of the at least one inorganic additive can also be or comprise nano-particles which can be of advantage for the at least one irradiation process as issues with undesired interactions of the light L1, L2 with the at least one inorganic additive can be avoided. As such, the size of the particles can be in the nanometer-range.

As another example, the at least one inorganic additive can comprise one or more fibers. Respective fibers can particularly, be beneficial for influencing the structural properties, e.g. the mechanical properties, of the dental component DC to be printed. Respective fibers can be fibers of organic materials and/or fibers of inorganic materials. Exemplary organic fibers can be or comprise carbon fibers or polymer fibers. Exemplary inorganic fibers can comprise ceramic fibers, metal fibers. The fibers can be regularly or irregularly distributed within the photocurable resin. A regular distribution of the fibers within the photocurable resin 20 can be realized by a fiber network in which individual fibers are connected at specific connection points or node points, respectively.

Generally, the fibers can comprise a length ranging between 0,1 µm and 10 µm, particularly between 0,1 and 9 µm, more particularly between 0,1 and 8 µm, more particularly between 0,1 and 7 µm, more particularly between 0,1 and 6 µm, more particularly between 0,1 and 5 µm, more particularly between 0,1 and 4 µm, more particularly between 0,1 and 3 µm, more particularly between 0,1 and 2 µm, more particularly between 0,1 and 1 µm.

Specifically, the fibers can also be or comprise nano-fibers which can be of advantage for the at least one irradiation process as issues with undesired interactions of the light L1, L2 with the at least one inorganic additive can be avoided. As such, the length of the fibers can be in the nanometer-range.

Exemplary embodiments of the method will now be described in connection with Fig. 2 - 6 which, as will be apparent from the following description, indicate that the apparatus 10 can be configured for implementing a special implementations of a method for volumetric printing a three-dimensional object by multi-color photopolymerization, particularly by dual-color photopolymerization, of a photocurable resin 20 which enable printing dental components DC of high structural fidelity:
The embodiments of the methods set forth in connection with the embodiments of Fig. 2 - 6 also comprise an irradiation process of irradiating, on basis of a plurality of printing parameters, a photocurable resin with light L1 of a first wavelength and light L2 of a second wavelength, which is different from the first wavelength, to form, by multi-color photopolymerization, particularly by dual-color photopolymerization, a three-dimensional object in at least one direction. The method thus, comprises a process of irradiating a photocurable resin with light L1 of a first wavelength and light L2 of a second wavelength, which is different from the first wavelength, to form, by multi-color photopolymerization, particularly by dual-color photopolymerization, a three-dimensional object in at least one direction, wherein irradiating the photocurable resin with the light L1, L2 of the first wavelength and the second wavelength is based on one or more printing parameters. The at least one direction can be or comprise the formation direction of the respective dental component to be printed.

As indicated above, the light L1 of the first wavelength can comprise a wavelength in the range of: 350 nm - 500 nm, particularly 375 nm - 450 nm, more particularly 385 nm - 440 nm, more particularly 395 nm - 420, more particularly 400 nm - 410 nm, for instance. The light L1 of the first wavelength can comprise a spectrum of wavelengths, particularly at least partly covering the respective ranges. As a concrete example, the first wavelength can be ca. 375 nm.

As indicated above, the light L2 of the second wavelength can comprise a wavelength in the range of: 400 nm - 1000 nm, particularly 425 - 750 nm, more particularly 450 - 675 nm, more particularly 500 - 650 nm, for instance. The light L2 of the second wavelength can comprise a spectrum of wavelengths, particularly at least partly covering the respective ranges. As an example, the second wavelength can be ca. 475 nm.

As indicated above, the photocurable resin 20 is irradiated with the light of the first wavelength and the light of the second wavelength such that the light L1 of the first wavelength and the light L2 of the second wavelength intersect in a formation zone FZ. The light L1 of the first wavelength can be irradiated into the photocurable resin 20 at a different angle relative to the light L2 of the second wavelength. As an example, the light L1 of the first wavelength can be irradiated into the photocurable resin at an angle of ca. 90° relative to the light L2 of the second wavelength. The formation zone FZ is the zone in which the photopolymerization of the photocurable resin 20 takes place which results in photocuring of the photocurable resin 20 and forming at least a cross-section of the three-dimensional object to be printed.

Respective printing parameters can generally be or comprise parameters of the irradiation process which influence the spatial and/or temporal irradiation of the photocurable resin 20 with the light L1, L2 of the first and the second wavelength. Respective printing parameters can additionally or alternatively be or comprise the number of irradiation steps in which one or more volume elements, e.g. voxels, of the photocurable resin 20 are irradiated with the light L1 of the first wavelength and/or with the light L2 of the second wavelength. As such, respective printing parameters can be or comprise control parameters of the apparatus 10 of Fig. 1 which concern the spatial and/or temporal irradiation of the photocurable resin 20 with the light L1, L2 of the first and the second wavelength to form, by multi-color photopolymerization, particularly by dual-color photopolymerization, a three-dimensional object in at least one direction. Respective printing parameters can be or comprise control parameters of the irradiation device 30 of the apparatus of Fig. 1. Respective printing parameters can also be or comprise control parameters of the drive device 60 of the apparatus 10 of Fig. 1.

The method comprises spatially and/or temporally varying at least one printing parameter, particularly at least one printing parameter influencing the curing or the curing behavior of the photocurable resin 20, during the irradiation process. The irradiation process of the method thus, comprises a concerted and deliberate spatial and/or temporal control of the irradiation process which comprises a concerted and deliberate variation of at least one printing parameter, particularly of at least one printing parameter influencing the curing behavior of the photocurable resin 20, during the irradiation process. A respective spatial and/or temporal variation of at least one printing parameter can also concern the number of irradiation steps in which one or more volume elements, e.g. voxels, of the photocurable resin 20 are irradiated with the light L1 of the first wavelength and/or the light L2 of the second wavelength. As such, a respective spatial and/or temporal variation of at least one printing parameter can also comprise a variation of the number of irradiation steps in which one or more volume elements, e.g. voxels, of the photocurable resin 20 are irradiated with the light L1 of the first wavelength and/or the light L2 of the second wavelength. A respective spatial and/or temporal variation of at least one printing parameter can also comprise a variation of the focus of the light L1 of the first wavelength and/or size of one or more images or one or more image elements, such as e.g. pixels, of the light L2 of the second wavelength. A respective spatial and/or temporal variation of at least one printing parameter can also concern the motion direction and/or motion rate of the photocurable resin 20, particularly relative to a light sheet formed by the light L1 of the first wavelength. As such, a respective spatial and/or temporal variation of at least one printing parameter can also comprise a variation of the motion direction and/or motion rate of the photocurable resin 20, particularly relative to a light sheet formed of the light L1 of the first wavelength.

Based on the spatial and/or temporal variation of at least one printing parameter, the irradiation process can thus, comprise that at least one first portion of the three-dimensional object or volume element to be printed (first object portion) is printed with at least one different printing parameter relative to at least one further portion of the three-dimensional object or volume element to be printed (further object portion). A respective first object portion can comprise one or more first volume elements, e.g. voxels, of the photocurable resin 20 which are located at one or more first positions within the photocurable resin 20. A respective further object portion can comprise one or more further volume elements, e.g. voxels, of the photocurable resin 20 which are located at one or more further positions within the photocurable resin 20. Respective further volume elements can be volume elements which are located behind respective first volume elements in the formation direction as indicated by arrow P1 in Fig. 1. Respective further volume elements can also be volume elements which are located adjacent to the dental component to be printed, such as e.g. volume elements which do not form part of the dental component to be printed. Particularly, respective further volume elements can also be volume elements which do not form part of the dental component to be printed as they are located in front of or behind the dental component to be printed with respect to the formation direction.

Generally, the spatial and/or temporal variation of at least one printing parameter enables that each volume element of the photocurable resin 20 can be irradiated with individual printing parameters, particularly printing parameters which influence e.g. the amount of energy, energy density, energy intensity, etc. the respective volume element is exposed to during the irradiation process.

The printing parameters for a respective volume element of the photocurable resin 20 can be chosen under consideration of the position of the respective volume element within the photocurable resin and within the dental component to be printed, respectively. As an example, one or more volume elements of the photocurable resin 20 which are located adjacent or in proximity to uncured or not to be cured photocurable resin 20 can be irradiated with different printing parameters than one or more volume elements of the photocurable resin 20 which are adjacent or in proximity to cured or to be cured photocurable resin 20. In such a manner, the spatial and/or temporal variation of at least one printing parameter can particularly be implemented to consider the so-called proximity-effect which causes that a volume element in proximity to another volume element which has already been cured exhibits a specific curing behavior, e.g. an easier or faster curing, which is different from the curing behavior of a volume element which is not in proximity to another volume element which has already been cured or photopolymerized, respectively. Notably, the proximity-effect oftentimes causes undesired structural anisotropy and related undesired lower shrinkage and deformation, respectively of three-dimensional objects in conventional volumetric printing methods.

As such, the method enables, based on the spatial and/or temporal variation of at least one printing parameter during the irradiation process, printing three-dimensional objects with higher structural isotropy and lower undesired shrinkage and deformation, respectively such that the resulting three-dimensional objects show higher geometrical accuracy and structural fidelity, respectively.

As indicated above, the at least one formation zone FZ can be moved along the at least one direction, particularly relative to a respective container 50 comprising the photocurable resin 20, at a nominal motion rate. The at least one direction can comprise the or a formation direction of the dental component to be printed. Motion of the at least one formation zone FZ can e.g. be relative to at least one functional component of the apparatus 10 used for implementing the method. A respective functional component of the apparatus 10 can be a respective container 50 or an irradiation device 30, for instance. As such, during the irradiation process, the at least one formation zone FZ can be actively moved along the at least one direction, particularly the formation direction, at a nominal motion rate through at least one part of the container volume 51, while the container 50 is stationary. Alternatively, during the irradiation process, at least one part of the container volume 51 can be actively moved along the at least one direction, particularly the formation direction, while the at least one formation zone FZ is stationary. Further alternatively, both the at least one formation zone FZ and at least one part of the container 50 can be actively moved, wherein the at least one formation zone FZ and the at least one part of the container 50 can be moved in the same direction or in opposite directions. Also the nominal motion rate at which the at least one formation zone FZ and/or the container 50 is moved along the at least one direction, particularly relative to the container 50, can be an example of a printing parameter because the nominal motion rate and particularly, spatial and/or temporal variations of the nominal motion rate can also influence the curing behavior of the photocurable resin. Additionally or alternatively, it is also possible that the or a second irradiation apparatus 32 of the dual-color irradiation device 30 can be actively moved along the at least one direction, particularly the formation direction, while at least one of the container 50 or the at least one formation zone FZ is actively moved. Moving the second irradiation apparatus 32 of the dual-color irradiation device 30 can be a means to implement a focus correction of the light L2 of the second wavelength in the at least one formation zone. As such, also embodiments are contemplated in which each of the first irradiation apparatus 31 of the dual-color irradiation device 30 or the at least one formation zone FZ, respectively, the second irradiation apparatus 32 of the dual-color irradiation device 30, and the container 50 are actively moved before, during or after the at least one irradiation process. Respective motions can be controlled by controller 40.

Fig. 2 is a diagram in which the vertical axis represents the energy level of the light L1 of the first wavelength (non-dotted line) and the energy level of the light L2 of the second wavelength (dotted line) and the horizontal axis represents a location x within the container volume 51 or the photocurable resin 20 or the time t, respectively.

Fig. 2 specifically shows that spatially and/or temporally varying the at least one printing parameter, particularly a printing parameter influencing the curing (behavior) of the photocurable resin 20, can comprise that the photocurable resin 20 is irradiated with the light L1 of the first wavelength before it is irradiated with the light L2 of the second wavelength. Hence, the variation of at least one printing parameter can comprise that the photocurable resin 20 is spatially and/or temporally irradiated with the light L1 of the first wavelength before it is irradiated with the light L2 of the second wavelength. As such, one or more volume elements of the dental component to be printed can be irradiated with the light L1 of the first wavelength before these volume elements are irradiated with the light L2 of the second wavelength. Respective one or more volume elements of the photocurable resin 20 can particularly, comprise the first volume elements of the dental component to be printed. In other words, the irradiation process can comprise that one or more volume elements can be (only) irradiated with the light L1 of the first wavelength spatially and/or temporally before subsequent volume elements are irradiated with the light L2 of the second wavelength (and typically also with the light L1 of the first wavelength). Irradiating volume elements of the photocurable resin 20 with the light L1 of the first wavelength only can result in a pre-activation of these volume elements which results in improved curing of the adjacent volume elements when they are subsequently irradiated with both the light L1, L2 of the first and the second wavelength and thus, result in improved structural properties of the respective dental component to be printed.

An example of irradiating the photocurable resin 20 with the light L1 of the first wavelength (spatially) before it is irradiated with the light L2 of the second wavelength which can be derived from Fig. 2 can comprise that irradiating the photocurable resin 20 with the light L1 of the first wavelength starts at a first position p1 and that irradiating the photocurable resin 20 with the light L2 of the second wavelength starts at a second position p2, wherein the second position p2 is located behind the first position p1 in the formation direction. The second position p2 is typically a position within a volume of the photocurable resin 20 which forms the respective dental component to be printed and thus, a position inside the respective three-dimensional object 20 to be printed. Particularly, the second position p2 can be a position within a volume of the photocurable resin 20 which forms an outer boundary or edge of the respective dental component to be printed and thus, a position at a surface of the respective dental component to be printed. As such, the dental component to be printed can comprise portions which are located behind the second position p2 with respect to the formation direction or the three-dimensional object is formed behind the second position p2 with respect to the formation direction, respectively. Hence, the second position p2 can comprise the first volume element, such as e.g. the first voxel, of the dental component to be printed with respect to the formation direction. The first position p1 can also be a position within a volume of the photocurable resin 20 which forms the respective dental component to be printed and thus, a position inside the respective dental component to be printed. Yet, the first position p1 can also be a position within a volume of the photocurable resin 20 which does not form the respective dental component to be printed and thus, a position outside the respective dental component to be printed.

Another example of irradiating the photocurable resin with the light L1 of the first wavelength (temporally) before it is irradiated with the light of the second wavelength which can be derived from Fig. 2 can comprise that irradiating the photocurable resin 20 with the light L1 of the first wavelength starts at a first time t1 and that irradiating the photocurable resin 20 with the light L2 of the second wavelength starts at a second time t2, wherein t2 > t1. The second time t2 typically corresponds to a time at which a volume of the photocurable resin 20 which forms the respective dental component to be printed is irradiated. Particularly, the second time t2 can correspond to a time at a volume of the photocurable resin 20 which forms an outer boundary or edge of the respective dental component to be printed and thus, a position at a surface of the respective dental component to be printed is irradiated. As such, the dental component to be printed can comprise portions which are to be printed after the second time t2 or the printing of the three-dimensional object is completed after the second time t2, respectively. Hence, the second time t2 can comprise a time at which the first volume element, such as e.g. the first voxel, of the dental component to be printed is printed with respect to the formation direction. The first time t1 can also correspond to a time at which a volume of the photocurable resin 20 which forms the respective dental component to be printed is irradiated. Yet, the first time t1 can also correspond to a time at which a volume of the photocurable resin 20 which does not form the respective dental component to be printed is irradiated.

Fig. 3 is another diagram in which the vertical axis represents the energy level of the light L1 of the first wavelength (non-dotted line) and the energy level of the light L2 of the second wavelength (dotted line) and the horizontal axis represents a location x within the container volume 51 or the photocurable resin 20 or the time t, respectively.

Fig. 3 specifically shows that spatially and/or temporally varying the at least one printing parameter, particularly a printing parameter influencing the curing (behavior) of the photocurable resin 20, can comprise that the photocurable resin 20 is irradiated with the light L1 of the first wavelength after it is irradiated with the light L2 of the second wavelength. Hence, the variation of at least one printing parameter can comprise that the photocurable resin 20 is spatially and/or temporally irradiated with the light L1 of the first wavelength after it is irradiated with the light L2 of the second wavelength. As such, one or more volume elements of the dental component to be printed can be irradiated with the light L1 of the first wavelength after the adjacent volume elements have been irradiated with the light L2 of the second wavelength. Respective one or more volume elements of the photocurable resin can particularly, comprise the last volume elements of the dental component to be printed. In other words, the irradiation process can comprise that one or more volume elements can be (only) irradiated with the light L1 of the first wavelength spatially and/or temporally after previous volume elements have been irradiated with the light L2 of the second wavelength (and typically also the light L1 of the first wavelength). Irradiating volume elements of the photocurable resin 20 with the light L1 of the first wavelength only can result in a post-activation of these and adjacent volume elements which results in further curing of these volume elements after they have been irradiated with both the light L1, L2 of the first and the second wavelength and thus, result in improved structural properties of the respective dental component to be printed.

An example of irradiating the photocurable resin with the light L1 of the first wavelength (spatially) after it is irradiated with the light L2 of the second wavelength which can be derived from Fig. 3 can comprise that irradiating the photocurable resin 20 with the light L2 of the second wavelength ends at a third position p3 and that irradiating the photocurable resin 20 with the light L1 of the first wavelength ends at a fourth position p4, wherein the fourth position p4 is behind the third position p3 in the formation direction. The third position p3 is typically a position within or at an outer boundary or edge of a volume of the photocurable resin 20 which forms the respective dental component to be printed and thus, a position inside the respective dental component to be printed. Particularly, the third position p3 can be a position within a volume of the photocurable resin which forms an outer boundary or edge of the respective dental component to be printed and thus, a position at a surface of the respective dental component to be printed. As such, the dental component to be printed can comprise portions which are located in front of the third position p3 with respect to the formation direction or the three-dimensional object is formed in front of the third position p3 with respect to the formation direction, respectively. Hence, the third position p3 can comprise the last volume element, such as e.g. the last voxel, of the dental component to be printed with respect to the formation direction. The fourth position p4 can also be a position within a volume of the photocurable resin 20 which forms the respective dental component to be printed and thus, a position inside the respective dental component to be printed. Yet, the fourth position p4 can also be a position within a volume of the photocurable resin 20 which does not form the respective dental component to be printed and thus, a position outside the respective dental component to be printed.

Another example of irradiating the photocurable resin with the light L1 of the first wavelength (temporally) after it is irradiated with the light L2 of the second wavelength which can be derived from Fig. 3 can comprise that irradiating the photocurable resin with the light L2 of the second wavelength ends at a third time t3 and that irradiating the photocurable resin 20 with the light L1 of the first wavelength ends at a fourth time t4, wherein t4 > t3. The third time t3 typically corresponds to a time at which a volume of the photocurable resin 20 which forms the respective dental component to be printed is irradiated. Particularly, the third time t3 can correspond to a time at a volume of the photocurable resin 20 which forms an outer boundary or edge of the respective dental component to be printed and thus, a position at a surface of the respective dental component to be printed is irradiated. As such, the dental component to be printed can comprise portions which are to be printed before the third time t3 or the printing of the three-dimensional object is completed before the third time t3, respectively. Hence, the third time t3 can comprise a time at which the last volume element, such as e.g. the last voxel, of the dental component to be printed is printed with respect to the formation direction. The fourth time t4 can also correspond to a time at which a volume of the photocurable resin 20 which forms the respective dental component to be printed is irradiated. Yet, the fourth time t4 can also correspond to a time at which a volume of the photocurable resin 20 which does not form the respective dental component to be printed is irradiated.

As such, the exemplary embodiments of Fig. 2 and Fig. 3, which can also be combined, show spatially and/or temporally varying the at least one printing parameter, particularly a printing parameter influencing the curing behavior of the photocurable resin 20, can comprise that the photocurable resin 20 is irradiated with the light L1 of the first wavelength, particularly only with the light L1 of the first wavelength, in a volume separate, particularly adjacent, more particularly directly adjacent, to the volume in which the three-dimensional object is to be printed, particularly wherein the volume is spatially and/or temporally before and/or behind the volume in which the three-dimensional object is to be printed with respect to the at least one formation direction of the three-dimensional object. In such a manner, pre- or post-activating the photocurable resin can be effected which can positively influence the structural properties of the dental component to be printed.

Thus, spatially and/or temporally irradiating the photocurable resin with the light L1 of the first wavelength before or after it is irradiated with the light L2 of the second wavelength can generally comprise that volume elements of the photocurable resin 20 which volume elements do not form part of a dental component to be printed can be irradiated (only) with the light L1 of the first wavelength. Such volume elements can be positioned, with respect to the formation direction of the dental component to be printed, before or in front of the volume elements which form part of the dental component to be printed or after or behind the volume elements which form part of the dental component to be printed.

It is also conceivable though that volume elements of the photocurable resin 20 which do not form part of a dental component to be printed can be irradiated (only) with the light L2 of the second wavelength such that the above remarks can also accordingly apply to the light L2 of the second wavelength.

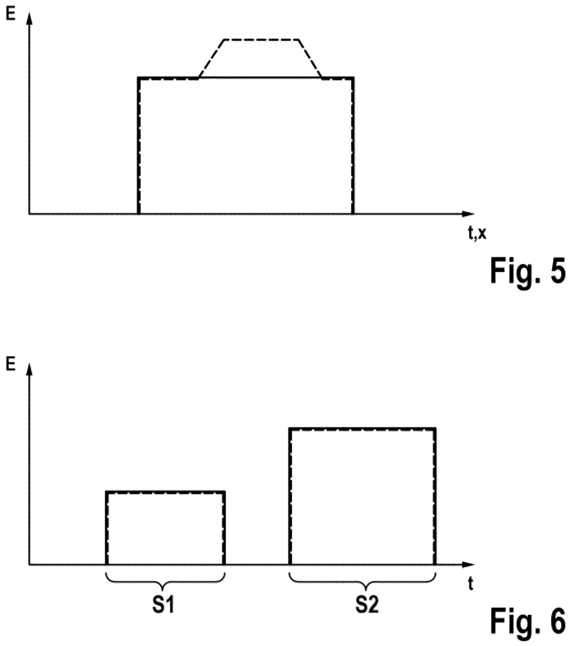

Fig. 4 and Fig. 5 are other diagrams in which the vertical axis represents the energy level of the light L1 of the first wavelength (non-dotted line) and the energy level of the light L2 of the second wavelength (dotted line) and the horizontal axis represents a location x within the container volume 51 or the photocurable resin 20 or the time t, respectively.

Fig. 4 specifically shows that spatially and/or temporally varying the at least one printing parameter, particularly a printing parameter influencing the curing behavior of the photocurable resin 20, can comprise irradiating the photocurable resin 20 with the light L1, L2 of the first wavelength and/or the second wavelength and spatially and/or temporally varying the energy, particularly the energy intensity, of the light L1, L2 of the first wavelength and/or the second wavelength, along the at least one formation direction. Spatially and/or temporally varying the energy, particularly the energy intensity, of the light L1, L2 of the first wavelength and/or the second wavelength, along the at least one formation can also positively influence the structural properties of the dental component to be printed, e.g. because it enables a control that each volume element of a dental component to be printed obtains a specific amount of energy which results in a desired curing of the respective volume element. As such, problems based on different degrees of curing of different volume elements of a dental component to be printed, which typically also lead to undesired structural anisotropy of the three-dimensional object, can be overcome or at least reduced. Likewise, the inhomogeneities caused by the proximity-effect (as explained further above) can be overcome or at least reduced because one or more volume elements in proximity to other volume elements which have already been cured or photopolymerized, respectively can be irradiated with a different energy relative to one or more volume elements which are not in proximity to other volume elements which have already been cured or photopolymerized, respectively.

Fig. 4 particularly shows that spatially and/or temporally varying the energy or energy intensity, respectively can comprise that the energy level of the light L1 of the first wavelength can be varied from a first energy level E1 to at least a second energy level E2, the at least one second energy level E2 being lower than the first energy level E1. Hence, the energy or energy intensity, respectively of the light L1 of the first wavelength can be dynamically or gradually spatially and/or temporally increased or decreased during the irradiation process, particularly with respect to a nominal value which can be, but is not limited to, a minimum or maximum energy or energy intensity, respectively. As such, the energy level of the light L1 of the first wavelength can comprise a peak at the beginning of the irradiation process as is exemplarily indicated in Fig. 4.

Fig. 5 particularly shows that spatially and/or temporally varying the energy or energy intensity, respectively of the light L2 of the second wavelength can comprise that the energy of the light L2 of the second wavelength can be varied from a first energy level to at least a second energy level, the at least one second energy level being higher or lower than the first energy level. Hence, the energy or energy intensity, respectively of the light L2 of the second wavelength can be dynamically or gradually spatially and/or temporally increased or decreased during the irradiation process, particularly with respect to a nominal value which can be, but is not limited to, a minimum or maximum energy level or energy intensity level, respectively.

As another example, spatially and/or temporally varying the energy, particularly the energy intensity, of the light L2 of the second wavelength along the at least one direction can comprise that one or more image elements, e.g. pixels, of respective images corresponding to a cross-sectional geometry of a dental component to be printed are spatially and/or temporally varied with respect to their energy or energy density, respectively. In other words, a respective projection of one or more images can comprise image elements of different energy or energy density, respectively. Varying the energy or energy density, respectively of respective image elements can comprise energy levels or energy density levels, respectively between minimum energy levels or minimum energy density levels, respectively and maximum energy levels or maximum energy density levels, respectively. Likewise, varying the energy or energy density, respectively of respective lines or points can comprise varying the energy levels or energy density levels, respectively between minimum energy levels or minimum energy density levels, respectively and maximum energy levels or maximum energy density levels, respectively. Varying the energy or energy density, respectively of respective image elements or points or lines, respectively can be effected by controlling a respective irradiation device used for generating respective projections of images or points or lines, respectively.

As another example, spatially and/or temporally varying the energy, particularly the energy intensity, of the light of the second wavelength along the at least one direction can comprise that one or more image elements, e.g. pixels, of respective images which correspond to a cross-sectional geometry of a dental component to be printed and/or one or more image elements, e.g. pixels, of respective images which do not correspond to a cross-sectional geometry of a dental component to be printed can be spatially and/or temporally varied such that the energy or energy intensity, respectively does not effect curing of the photocurable resin 20. Hence, spatially and/or temporally varying the energy, particularly the energy intensity, of the light L2 of the second wavelength can comprise that the energy or energy intensity, respectively can be spatially and/or temporally set to a level which does not result in curing of the photocurable resin 20 or to a level which results in undercuring of the photocurable resin 20.

Yet, it is also conceivable that spatially and/or temporally varying the energy, particularly the energy intensity, of the light L2 of the second wavelength can comprise that the energy or energy intensity, respectively can be spatially and/or temporally set to a level which results in overcuring of the photocurable resin 20.

It is apparent from Fig. 4 that the photocurable resin 20 can be irradiated with the light L1 of the first wavelength at the first energy level, which can be a comparatively higher energy level compared to a nominal energy level or a second energy level, in an initial volume of the to be printed three-dimensional object which initial volume comprises at most 10%, particularly at most 9%, more particularly at most 8%, more particularly at most 7%, more particularly at most 6%, more particularly at most 5%, more particularly at most 4%, more particularly at most 3%, more particularly at most 2%, more particularly at most 1%, more particularly at most 0.9%, more particularly at most 0.8%, more particularly at most 0.7%, more particularly at most 0.6%, more particularly at most 0.5%, more particularly at most 0.4%, more particularly at most 0.3%, more particularly at most 0.2%, more particularly at most 0.1%, more particularly at most at most 0.09%, more particularly at most 0.08%, more particularly at most 0.07%, more particularly at most 0.06%, more particularly at most 0.05%, more particularly at most 0.04%, more particularly at most 0.03%, more particularly at most 0.02%, more particularly at most 0.01%, of the spatial extension of the dental component to be printed in the at least one direction. Irradiating the photocurable resin 20 with the light of the first wavelength at a higher energy level in an initial volume of the to be printed three-dimensional object in the at least one direction can particularly, result in compensation or at least reduction of the inhomogeneity caused by the proximity-effect, for instance and thus, lead to three-dimensional objects with less structural anisotropy and improved structural properties.

It is further apparent from Fig. 4 that the photocurable resin 20 can be irradiated with the light L1 of the first wavelength at the first energy level, which can be a comparatively higher energy level compared to a nominal energy level or a second energy level, for an initial time of at most 10 sec, particularly at most 9 sec, more particularly at most 8 sec, more particularly at most 7 sec, more particularly at most 6 sec, more particularly at most 5 sec, more particularly at most 4 sec, more particularly at most 3 sec, more particularly at most 2 sec, more particularly at most 1 sec, more particularly at most 0.9 sec, more particularly at most 0.8 sec, more particularly at most 0.7 sec, more particularly at most 0.6 sec, more particularly at most 0.5 sec, more particularly at most 0.4 sec, more particularly at most 0.3 sec, more particularly at most 0.2 sec, more particularly at most 0.1 sec, more particularly at most at most 0.09 sec, more particularly at most 0.08 sec, more particularly at most 0.07 sec, more particularly at most 0.06 sec, more particularly at most 0.05 sec, more particularly at most 0.04 sec, more particularly at most 0.03 sec, more particularly at most 0.02 sec, more particularly at most 0.01 sec, of the overall duration of the irradiation process, particularly the overall duration of the period of the irradiation process in which the photocurable resin 20 is cured by multi-color photopolymerization to print a three-dimensional object. The respective times can correspond to periods of the irradiation process in which at least the first frame, particularly at most the first 100 frames, more particularly at most the first 90 frames, more particularly at most the first 80 frames, more particularly at most the first 70 frames, more particularly at most the first 60 frames, more particularly at most the first 50 frames, more particularly at most the first 40 frames, more particularly at most the first 30 frames, more particularly at most the first 20 frames, more particularly at most the first 10 frames, of a projection of images of the light L2 of the second wavelength is irradiated into the photocurable resin 20.

Alternatively or additionally, spatially and/or temporally varying the at least one printing parameter, particularly a printing parameter influencing the curing behavior of the photocurable resin 20, can comprise varying a focus parameter, such as e.g. the size and/or the position, of the or a focus of the light L1 of the first wavelength and/or varying an image parameter, e.g. the size and/or the position, of an image or of at least one image element, e.g. a pixel, of an image projected with the light L2 of the second wavelength. Hence, a focus parameter, such as e.g. the size and/or the position, of the or a focus of the light L1 of the first wavelength, which can comprise a plurality of light beams extending through the photocurable resin, e.g. in the shape of a light sheet, can be a printing parameter which can be varied during the irradiation process which enables e.g. spatially and/or temporally influencing the curing result in the formation zone FZ and the resolution of features of the dental component to be printed, respectively. Varying one or more focus parameters of the light L1 of the first wavelength can be implemented by one or more optical elements, such as e.g. (moveable) lenses, assigned to the irradiation device 30 used for generating the light L1 of the first wavelength and respective light beams, particularly light beams forming a light sheet, extending through the photocurable resin 20, for instance. Respective optical elements can form part of a focus adjusting device of the irradiation device which can be configured for adjusting one or more focus parameters of the light L1 of the first wavelength. Additionally or alternatively, an image parameter, such as e.g. the size and/or the position, of the or a projected image or at least one image element of the light L2 of the second wavelength, which can comprise a projection of images corresponding to a cross-sectional geometry of a dental component to be printed, can be a printing parameter which can be varied during the irradiation process which enables e.g. spatially and/or temporally influencing the curing result in the formation zone FZ and the resolution of features of the dental component to be printed, respectively. Varying one or more image parameters of an image of the light L2 of the second wavelength can be implemented with one or more optical elements, such as e.g. (moveable) lenses, pixel generators, etc., assigned to the irradiation device 30 used for generating the light L2 of the second wavelength and respective images corresponding to a cross-sectional geometry of a dental component to be printed, for instance. Respective optical elements can form part of an image adjusting device of the irradiation device 30 which can be configured for adjusting one or more image parameters of the light L2 of the second wavelength. A respective image adjusting device can be a hardware- and/or software-embodied component of a light projection device, such as e.g. a digital light projection device, for instance.

Fig. 4 and 5 also generally indicate that spatially and/or temporally varying the energy of the light L2 of the second wavelength can comprise varying the energy or energy distribution of at least a part, e.g. a pixel, of at least one projected image corresponding to a cross-sectional geometry of a dental component to be printed or of at least one point or line of at least one light beam corresponding to a cross-sectional geometry of a dental component to be printed. Particularly, the energy of the light L2 of second wavelength can be varied along the at least one direction such that, with respect to the formation direction, upstream portions of the three-dimensional object are exposed to different energy levels of the light L2 of the second wavelength than downstream portions of the three-dimensional object. As indicated above, spatially and/or temporally varying the energy of the light L2 of the second wavelength can lead to three-dimensional objects with less structural anisotropy and improved structural properties.

As an example, spatially and/or temporally varying the energy or energy intensity, respectively of the light L2 of the second wavelength can comprise varying the energy or energy intensity, respectively of at least a part of at least one image, particularly at least one image element, e.g. a pixel, of the image, in a sequence comprising at least three energy levels E1, E2, and E3 or energy intensity levels, respectively E1, E2, and E3, wherein the energy level or energy intensity level, respectively is changed from E1 to E2, with E2>E1, and wherein the energy level or energy intensity level, respectively is changed from E2 to E3 and E2>E3 and particularly E3>E1, for instance. Particularly, the first energy level E1 can be assigned to one or more volume elements of the photocurable resin 20 in which no or only little photopolymerization of the photocurable resin 20 is desired; such volume elements of the photocurable resin 20 can comprise volume elements which do not form part of a dental component to be printed. As such, the first energy level can also be zero (E1=0). Particularly, the second energy level E2 can be assigned to one or more volume elements of the photocurable resin 20 which do form part of the three-dimensional to be printed. Specifically, the second energy level E2 can be assigned to one or more volume elements of the photocurable resin 20 which form part of at least the first volume element of three-dimensional to be printed with respect to the formation direction. Particularly, the second energy level E2 can be assigned to one or more volume elements of the photocurable resin 20 which do form part of the three-dimensional to be printed. Specifically, the third level E3 can be assigned to one or more volume elements of the photocurable resin 20 which form part of further volume elements of the dental component to be printed which further volume elements are located behind the first volume element of three-dimensional to be printed with respect to the formation direction. Further, a fourth energy level E4 can be implemented and assigned to one or more volume elements of the photocurable resin 20 which do not form part of the dental component to be printed. Particularly, the fourth energy level E4 can be assigned to volume elements of the photocurable resin which are located behind the last volume elements of the photocurable resin which form part of the dental component to be printed. As such, the fourth energy level can also be zero (E4=0).

According to another exemplary embodiment, spatially and/or temporally varying the at least one printing parameter, particularly a printing parameter influencing the curing behavior of the photocurable resin 20, can comprise irradiating the photocurable resin 20 with the light L1 of the first wavelength and/or the light L2 of the second wavelength while the at least one formation zone FZ is not moving relative to the or a respective container 50 during the irradiation process or while the at least one formation zone FZ is moved at a varied motion rate which is lower than the nominal motion rate. A respective varied motion rate can also be zero. Hence, also the motion rate at which the at least one formation zone FZ is moved, particularly relative to the or a respective container 50, is a printing parameter which can be spatially and/or temporally varied, e.g. to achieve printing three-dimensional objects having higher structural isotropy.

As an example, irradiating the photocurable resin 20 with the light L1 of the first wavelength and/or the light L2 of the second wavelength while the at least one formation zone FZ is not moving relative to the or a respective container 50 during the irradiation process or while the at least one formation zone FZ is moving at a motion rate which is lower than the nominal motion rate can comprise irradiating the photocurable resin 20 with the light L1 of the first wavelength while the photocurable resin 20 moves comparatively slow or does not even move relative to container 50 such that the respective volume elements of the photocurable resin 20 are irradiated with the light L1 of the first wavelength for a comparatively long period. In this period, the light L2 of the second wavelength can comprise constant images or stationary images, for instance. Alternatively, in this period, no light L2 of the second wavelength is irradiated into the photocurable resin 20 and the working volume, for instance.

According to another exemplary embodiment, spatially and/or temporally varying the at least one printing parameter, particularly a printing parameter influencing the curing behavior of the photocurable resin 20, can also comprise irradiating the photocurable resin with the light L1, L2 of the first and/or second wavelength while the at least one formation zone FZ is moved along two different directions. Hence, also the motion direction along which the at least one formation zone FZ is moved, particularly relative to the or a respective container 50, is a printing parameter which can be spatially and/or temporally varied, e.g. to achieve printing three-dimensional objects having higher structural isotropy.

As an example, the at least one formation zone FZ can be moved along a first motion path in a first motion direction while it is irradiated with the light L1, L2 of the first and/or the second wavelength, particularly while it is irradiated only with the light L1 of the first wavelength, and the at least one formation zone FZ is moved along a second motion path in a second motion direction, particularly opposite the first direction, while it is irradiated with the light L1, L2 of the first and/or the second wavelength, particularly while it is irradiated with the light L1, L2 of both the first and second wavelength. Particularly, the first motion direction can be a motion direction away from an irradiation device 30, particularly a digital light projection device, of an apparatus 10 used for implementing the method which generates the light L2 of the second wavelength and the second motion direction can be opposition thereto, or vice versa.

As another example, the first motion path can differ, particularly in length, from the second motion path. Particularly, the first motion path can be shorter than the second motion path. As such, the irradiation of the photocurable resin 20 with the light of the first wavelength applied to the photocurable resin 20 when the at least one formation zone FZ is moved along the first motion path can be shorter compared to when the at least one formation zone FZ is moved along the second motion path.

Fig. 6 is another diagram in which the vertical axis represents the energy level of the light L1 of the first wavelength (non-dotted line) and the energy level of the light L2 of the second wavelength (dotted line) and the horizontal axis represents the time t.

Fig. 6 specifically shows that the irradiation process can comprise irradiating the photocurable resin 20 with the light L1, L2 of the first wavelength and the second wavelength to form a pre-polymerized three-dimensional pre-component in a first irradiation step S1, and wherein the pre-polymerized three-dimensional pre-component is irradiated with the light L1, L2 of the first wavelength and the second wavelength in a second irradiation step S2 which causes formation of the three-dimensional object, particularly after completion of the first irradiation step. As such, also the number of respective irradiation steps can be a printing parameter which can be spatially and/or temporally varied. Notably, this embodiment can comprise the formation of a pre-polymerized three-dimensional pre-component in the first irradiation step S1, which three-dimensional pre-component can already comprise a shape and/or dimension (substantially) corresponding to the three-dimensional object which is to be printed. However, the three-dimensional pre-component can differ from the actual three-dimensional object which is to be printed in the degree of curing of the photocurable resin. In other words, the three-dimensional pre-component can have a lower degree of curing of the photocurable resin, e.g. the three-dimensional pre-component can have a degree of curing which does not allow handling of the three-dimensional pre-component for instance. Yet, printing the actual three-dimensional object via a respective intermediate pre-component can result in improved structural properties of the actual three-dimensional object.

Notably, the respective energy levels of the light L1, L2 of the first and/or second wavelength applied in the first and second irradiation step S1, S2 can differ (as exemplarily shown in Fig. 6). but can also be (substantially) the same.

As can also be derived from the embodiment of Fig. 6, the photocurable resin 20 can be irradiated with the light L1, L2 of the first wavelength and the second wavelength to form a pre-polymerized three-dimensional pre-component in a first irradiation step S1, wherein the pre-polymerized three-dimensional pre-component is irradiated with the light L1, L2 of the first wavelength and the second wavelength which causes further polymerization of the pre-polymerized three-dimensional object in a second irradiation step S2, and wherein the second irradiation step S2 can be repeated multiple times. Notably, the formation zone FZ can be moved along a respective first motion path in a first motion direction in the first irradiation step S1 and along a respective second motion path in a second motion direction, particularly opposite the first motion direction, in the at least one second irradiation step S2.

Generally, the photocurable resin 20 can be irradiated with the light L1 of the first wavelength forming a pre-polymerized photocurable resin in a first irradiation step, and wherein the pre-polymerized photocurable resin is irradiated with the light L1, L2 of the first wavelength and the second wavelength in a further irradiation step which causes formation of the three-dimensional object, particularly after completion of the first irradiation step. Particularly, the intensity light of the first wavelength L1 in the first irradiation step can be of an intensity lower than the intensity required for curing or solidification of the photocurable resin or the intensity required for causing formation of the three-dimensional object, i.e. the dental component DC, to be printed, respectively. Also printing the actual three-dimensional object via a respective intermediate pre-polymerized photocurable resin can result in improved structural properties of the actual three-dimensional object.

According to another exemplary embodiment, spatially and/or temporally varying the at least one printing parameter, particularly a printing parameter influencing the curing behavior of the photocurable resin, can comprise, which particularly applies for embodiments of the method in which multiple separate three-dimensional objects are to be printed, particularly simultaneously, setting the start position and/or the start time and/or the end position and/or the end time for irradiating the photocurable resin with the light of the second wavelength for printing a first three-dimensional object different from the start position and/or the start time for irradiating the photocurable resin with the light of the second wavelength for printing a further three-dimensional object. Particularly, the exemplary embodiment can enable that the photocurable resin is still irradiated with light of the second wavelength, e.g. by so-called dark images, even though printing of at least one three-dimensional object has been completed which will result in that the respective three-dimensional object which has been completed first will have a high(er) structural fidelity. Notably, this exemplary embodiment particularly applies to lateral arrangement of the multiple three-dimensional objects to be printed. As such, their respective formation directions are arranged in parallel.

In either of the embodiments, the formation time of the three-dimensional object can be at most 1 min per 1 mm extension of the three-dimensional object in the at least one direction. As such, the method can be implemented with high printing speeds which is another exemplary printing parameter which can influence the curing behavior of the photocurable resin 20.

Further, the formation time of the dental component DC can be at least 1 min per 1 mm extension of the dental component in the at least one direction in either of the embodiments. Particularly, the formation time of the dental component DC can be at least 2 min per 1 mm extension of the dental component DC in the at least one direction. More particularly the formation time of the dental component DC can be at least 4 min per 1 mm extension of the dental component DC in the at least one direction. As such, the method can be implemented with high printing speeds which is another exemplary printing parameter which can influence the curing behavior of the photocurable resin. Surprisingly, a high speed for the formation leads to an improved structural fidelity, although a lower resolution in the formation direction would be expected.

In either of the embodiments, the method can comprise at least one post-processing process, which is typically performed after completion of the at least one irradiation process. In the at least one post-processing process, the at least one dental component DC resulting from the at least one irradiation process undergoes at least one measure to change at least one property, particularly at least one of the following properties: the structural properties, particularly the mechanical properties, the optical properties, the thermal properties, the electrical properties, etc. Notably, a dental component DC which directly results from the at least one irradiation process can be a green component (or green body), i.e. an intermediate component which does not exhibit all desired properties of the respective dental component DC which are required for its intended use. As an example, a respective intermediate component can show lower mechanical properties, such as e.g. lower hardness, lower stiffness, etc., of a respective dental component DC which are required for its intended use. As such, the at least one post processing process can comprise that the as printed dental component (green component) is turned into a brown part. A respective post-processing process can thus, comprise at least one measure which enables post-curing of the as printed dental component (green component), particularly to transfer it into at least a brown component. A respective measure can comprise at least one of the following: subjecting the as printed dental component to elevated temperatures, e.g. by placing it in a heating device, such as e.g. an oven in which it undergoes post-curing; subjecting the as printed dental component to radiation exposure, e.g. by placing it in a radiation device in which it is irradiated with radiation to undergo post-curing; subjecting the as printed dental component to a chemically reactive atmosphere, e.g. by placing it in a chemical reactor in which it can react with a reaction agent to undergo post-curing, etc.

One, more, or all aspects mentioned in connection with at least one embodiment can be combined with one, more, or all aspects mentioned in connection with at least one other embodiment.

## Claims

1. A method for volumetric printing a dental component by photopolymerization of a photocurable resin, which comprises at least one irradiation process of irradiating a photocurable resin with light of at least one wavelength to form, by photopolymerization, a dental component.

2. The method of claim 1, wherein the at least one irradiation process comprises irradiating the photocurable resin with light from at least two different directions, particularly such that one or more volume elements of the photocurable resin are irradiated with light from at least two different angles.

3. The method of claim 1 or 2, wherein the at least one irradiation process comprises irradiating the photocurable resin with light of a first wavelength and light of a second wavelength, different from the first wavelength, to form, by multi-color photopolymerization, the dental component, wherein the light of the first wavelength and the light of the second wavelength intersect in a formation zone.

4. The method of claim 3, wherein irradiating the photocurable resin with the light of the first wavelength causes one or more photoinitiator molecules of the photocurable resin to transfer from an initial state into an intermediate state with changed optical properties compared to the initial state, such that the molecules of the one or more photoinitiators in the intermediate state can absorb the light of the second wavelength which results in that the molecules of the one or more photoinitiators are transferred from the intermediate state to a reactive state by absorption of light of the second wavelength which locally triggers the polymerization of the photocurable resin to form at least one dental component.

5. The method according to any one of the preceding claims 1 - 4, wherein the light has a wavelength ranging between 350 nm and 500 nm, particularly between 375 nm and 475 nm, more particularly between 375 nm and 455 nm, more particularly between 395 nm and 425 nm, or according to claim 5, wherein the first wavelength ranges between 350 nm and 500 nm, particularly between 375 nm and 475 nm, more particularly between 375 nm and 455 nm, more particularly between 395 nm and 425 nm, and the second wavelength ranges between 350 and 800 nm.

6. The method according to any one of the preceding claims, wherein at least one of the photocurable resin, an irradiation device emitting the light, or an irradiation area within the photocurable resin which is irradiated with the light is moved during the at least one irradiation process.

7. The method according to any one of the preceding claims, further comprising at least one post-processing step in which the dental component resulting from the irradiation process undergoes at least one measure to change at least one of: the structural properties, particularly the mechanical properties, the optical properties, the thermal properties, the electrical properties.

8. The method according to any one of the preceding claims, wherein the photocurable resin comprises at least one inorganic additive selected from a bone composite material or a bone replacement composite material.

9. The method according to any one of the preceding claims, wherein the photocurable resin comprises at least one inorganic additive selected from a metal, particularly a biocompatible metal, or a metal alloy, particularly a biocompatible metal alloy.

10. The method according to any one of the preceding claims, wherein the photocurable resin comprises at least one inorganic additive selected from a ceramic, particularly a biocompatible ceramic, or a ceramic composition, particularly a biocompatible ceramic composition.

11. The method according to any one of claims 8 - 10, wherein the at least one additive is present in an amount ranging between 0,1 and 75 wt.-%, particularly in an amount ranging between 0,1 and 50 wt.-%, particularly in an amount ranging between 0,1 and 25 wt.-%.

12. The method according to any one of claims 8 - 11, wherein the at least one inorganic additive comprises particles.

13. The method of claim 12, wherein the particles comprise a spherical or non-spherical shape, particularly a plate-like shape, an ellipsoid shape, or a longitudinal shape, wherein the particles particularly comprise a spatial extension of less than 10 µm.

14. The method according to any one of the preceding claims, wherein the at least one inorganic additive comprises one or more fibers, wherein the fibers particularly comprise a length ranging between 0,1 µm and 10 µm.

15. The method according to any one of the preceding claims, wherein the dental component is or comprises a dental prosthesis, particularly a dental implant, a bridge, or an inlay, overlay etc.

16. The method according to any one of the preceding claims, wherein the dental component is or comprises an orthodontic device for positioning and/or orienting one or more teeth, such as e.g. an aligner or a dental brace respectively, which is used to adjust the position and/or orientation of teeth.
